# EUROPEAN PATENT APPLICATION

(11) **EP 4 557 198 A1**
(43) Date of publication of application: **21.05.2025**
(21) Application number: 23838919.1
(22) Date of filing: 11.07.2023
(51) Int. Cl.: G06Q 20/28

(54) **DIGITAL CURRENCY-BASED PREPAYMENT FUND MANAGEMENT METHOD, APPARATUS AND SYSTEM**

(30) Priority: 11.07.2022 CN 202210809398; 11.07.2022 CN 202210809411; 11.07.2022 CN 202210809416; 11.07.2022 CN 202210809405
(71) Applicant: Digital Currency Institute, The People's Bank of China, Beijing 100071 (CN); Shenzhen Financial Technology Institute (Financial Technology Institute, PBC), Shenzhen, Guangdong 518000 (CN)
(72) Inventor: MU, Changchun, Beijing 100071 (CN); LYU, Yuan, Beijing 100071 (CN); QI, Tongfei, Beijing 100071 (CN); ZHANG, Mingming, Beijing 100071 (CN); MENG, Xiao, Beijing 100071 (CN); LIU, Jinhao, Beijing 100071 (CN)
(74) Representative: Murgitroyd & Company
(86) International application number: PCT/CN2023/106687
(87) International publication number: WO 2024/012427

(57) **Abstract**

The present application relates to the technical field of digital currencies. Disclosed are a digital currency-based prepayment fund management method, an apparatus and a system. A specific embodiment of the method is applied to a merchant operating agency signing a prepayment fund service agreement with a target merchant and deploying one or more prepayment card smart contracts, and comprises: receiving a generation request for a prepayment card which indicates a target merchant, user information of the prepayment card, a prepayment amount and a prepayment card type; generating a payment order according to the prepayment amount and receiving a first digital currency for prepayment; generating a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and storing a second digital currency corresponding to the target prepayment card in the smart contract sub-wallet. The embodiment disenables merchants to use prepaid digital currencies in advance, thus improving the transaction security of prepayment cards.

## Description

### CROSS-REFERENCE TO RELATED APPLICATION(S)

This application claims priorities to the Chinese Patent Application No. 202210809398.8, filed on July 11, 2022, with a disclosed title "A DIGITAL CURRENCY-BASED PREPAYMENT FUND MANAGEMENT METHOD, APPARATUS, AND SYSTEM", the Chinese Patent Application No. 202210809411.X, filed on July 11, 2022, with a disclosed title "A DIGITAL CURRENCY-BASED PREPAYMENT FUND MANAGEMENT METHOD, APPARATUS, AND SYSTEM", the Chinese Patent Application No. 202210809416.2, filed on July 11, 2022, with a disclosed title "A DIGITAL CURRENCY-BASED PREPAYMENT FUND MANAGEMENT METHOD, APPARATUS, AND SYSTEM", and the Chinese Patent Application No. 202210809405.4, filed on July 11, 2022, with a disclosed title "A DIGITAL CURRENCY-BASED PREPAYMENT FUND MANAGEMENT METHOD, APPARATUS, AND SYSTEM". The contents disclosed in the above-mentioned Chinese Patent Applications are incorporated herein by reference entirely as a portion or all of the present application.

### TECHNICAL FIELD

The present disclosure relates to the technology field of digital currencies, and in particular, to a digital currency-based prepayment fund management method, apparatus, and system.

### BACKGROUND

In daily life, prepayment cards, which are prepayment credentials for merchants (such as online sellers and offline merchants) to provide users with specific commodities or services, have been increasingly widely used.

In existing usage scenarios of the prepayment cards, the currency prepaid by a user is directly stored in a prepayment card, and a merchant may use the currency in the prepayment card for other transactions (such as cash withdrawals and transfers, etc.), which may cause the currency prepaid by the user to be misappropriated in advance, or even may cause a situation that the merchant only receives the payment but does not provide commodities or services, which reduces the transaction security of the prepayment card and makes it difficult to protect rights and interests of the user.

### SUMMARY

In view of this, the embodiments of the present disclosure provide a digital currency-based prepayment fund management method, apparatus, and system. Through a prepayment fund service agreement between a merchant operating agency and a target merchant, and deploying a prepayment card smart contract in the merchant operating agency, after the merchant operating agency receives a generation request for a prepayment card corresponding to a prepayment fund, a payment order may be generated according to a prepayment amount to enable a user to pay, thus to receive a first digital currency used for prepayment. Then, a target prepayment card and a smart contract sub-wallet are generated according to the target merchant, user information of the prepayment card and the first digital currency. The smart contract sub-wallet is opened in the merchant operating agency, but belongs to the user, and is bound to the target prepayment card of the user correspondingly, the prepayment card smart contract is bound to the smart contract sub-wallet for execution. Therefore, a second digital currency corresponding to the target prepayment card is stored in the smart contract sub-wallet, and the second digital currency in the wallet does not belong to the target merchant as well, so that the target merchant cannot misappropriate the second digital currency in advance, thereby improving the transaction security of the prepayment card, which is beneficial to protecting rights and interests of the user.

In addition, the smart contract sub-wallet is set in the merchant operating agency, so that the merchant may communicate directly with its corresponding operating agency, thereby facilitating the storage of the second digital currency in the smart contract sub-wallet into a financial management account by the same operating agency, which is beneficial to improving rights and interests of the merchant.

To achieve the above purposes, a digital currency-based prepayment fund management method is provided according to a first aspect of the embodiments of the present disclosure. The digital currency-based prepayment fund management method in the embodiments of the present disclosure is applied to a merchant operating agency, where the merchant operating agency signs a prepayment fund service agreement with a target merchant and deploys one or more prepayment card smart contracts, and the method includes:
receiving a generation request for a prepayment card corresponding to a prepayment fund, the generation request indicating the target merchant corresponding to the prepayment card to be generated, user information of the prepayment card, a prepayment amount, and a prepayment card type;
generating a payment order according to the prepayment amount and receiving a first digital currency for prepayment;
generating a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and
storing a second digital currency corresponding to the target prepayment card in the smart contract sub-wallet.

To achieve the above purposes, a digital currency-based prepayment fund management apparatus is provided according to a second aspect of the embodiments of the present disclosure. The digital currency-based prepayment fund management apparatus in the embodiments of the present disclosure is applied to a merchant operating agency, where the merchant operating agency signs a prepayment fund service agreement with a target merchant and deploys one or more prepayment card smart contracts, and the apparatus includes:
a generation request receiving module, configured to receive a generation request for a prepayment card, the generation request indicating the target merchant corresponding to the prepayment card to be generated, user information of the prepayment card, a prepayment amount, and a prepayment card type;
an order generating module, configured to generate a payment order according to the prepayment amount and receive a first digital currency for prepayment;
a prepayment card generating module, configured to generate a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and
a digital currency storing module, configured to store a second digital currency corresponding to the target prepayment card in the smart contract sub-wallet.

To achieve the above purposes, a digital currency-based prepayment fund management system is provided according to a third aspect of the embodiments of the present disclosure. The digital currency-based prepayment fund management system in the embodiments of the present disclosure includes: any digital currency-based prepayment fund management apparatus provided in the above second aspect and a merchant end; where the merchant end includes a merchant digital currency wallet;
the merchant end is configured to send a generation request for a prepayment card to the management apparatus according to a trigger of a user, and the generation request indicates the target merchant corresponding to the prepayment card to be generated, user information of the prepayment card, a prepayment amount, and a prepayment card type; and
the management apparatus is configured to generate a payment order according to the prepayment amount and receive a first digital currency for prepayment; generate a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and store a second digital currency corresponding to the target prepayment card in the smart contract sub-wallet.

To achieve the above purposes, a digital currency-based prepayment fund management method is provided according to a fourth aspect of the embodiments of the present disclosure. The digital currency-based prepayment fund management method in the embodiments of the present disclosure may be applied to a merchant operating agency, and the method includes:
receiving a usage request for a prepayment card corresponding to a prepayment fund, the usage request indicating an identifier of the prepayment card to be used, a transaction identifier, a first transaction amount, and first transaction rights and interests;
determining a target prepayment card corresponding to the identifier of the prepayment card and a smart contract sub-wallet corresponding to the target prepayment card according to the usage request; where a second digital currency corresponding to the target prepayment card is stored in the smart contract sub-wallet, and the smart contract sub-wallet is set in the merchant operating agency, and is bound to a prepayment card smart contract; and
sending the first transaction amount and the first transaction rights and interests to the prepayment card smart contract for verification, generating a fifth digital currency corresponding to the first transaction amount according to the second digital currency, after determining that the verification passes by the prepayment card smart contract, and storing the fifth digital currency in a merchant digital currency wallet corresponding to a target merchant.

To achieve the above purposes, a digital currency-based prepayment fund management apparatus is provided according to a fifth aspect of the embodiments of the present disclosure. The digital currency-based prepayment fund management apparatus in the embodiments of the present disclosure may be applied to a merchant operating agency, and the apparatus includes:
a request receiving module, configured to receive a usage request for a prepayment card corresponding to a prepayment fund, the usage request indicating an identifier of the prepayment card to be used, a transaction identifier, a first transaction amount, and first transaction rights and interests;
a first prepayment card determinating module, configured to determine a target prepayment card corresponding to the identifier of the prepayment card and a smart contract sub-wallet corresponding to the target prepayment card according to the usage request; where a second digital currency corresponding to the target prepayment card is stored in the smart contract sub-wallet, and the smart contract sub-wallet is set in the merchant operating agency, and is bound to a prepayment card smart contract; and
a digital currency processing module, configured to send the first transaction amount and the first transaction rights and interests to the prepayment card smart contract for verification, generating a fifth digital currency corresponding to the first transaction amount according to the second digital currency, after determining that the verification passes by the prepayment card smart contract, and storing the fifth digital currency in a merchant digital currency wallet corresponding to a target merchant.

To achieve the above purposes, a digital currency-based prepayment fund management system is provided according to a sixth aspect of the embodiments of the present disclosure. The digital currency-based prepayment fund management system in the embodiments of the present disclosure includes: any digital currency-based prepayment fund management apparatus provided in the above fifth aspect and a merchant end; where
the merchant end is configured to send a usage request to the management apparatus, where the usage request indicates an identifier of a prepayment card to be used, a transaction identifier, a first transaction amount, and first transaction rights and interests; and
the management apparatus is configured to generate a second digital currency corresponding to the first transaction amount, and store the second digital currency in a merchant digital currency wallet corresponding to the target merchant.

To achieve the above purposes, a digital currency-based prepayment fund management method is provided according to a seventh aspect of the embodiments of the present disclosure. The digital currency-based prepayment fund management method may be applied to a merchant operating agency, and include: receiving a gift request for a prepayment card corresponding to a prepayment fund, the gift request indicating an identifier of a first prepayment card to be gifted and user information of a giftee;
determining a first target prepayment card corresponding to the identifier of the first prepayment card to be gifted and a first smart contract sub-wallet corresponding to the first target prepayment card according to the gift request, where a second digital currency corresponding to the first target prepayment card is stored in the first smart contract sub-wallet, and the first smart contract sub-wallet is set in the merchant operating agency and is bound to a first prepayment card smart contract;
sending the identifier of the first prepayment card and the user information of the giftee to a gift smart contract pre-loaded according to the gift request to perform verification, and after determining that the verification passes, generating a second target prepayment card and a second smart contract sub-wallet according to the first target prepayment card, the second digital currency and the user information of the giftee, where the second smart contract sub-wallet is set in the merchant operating agency and is bound to second prepayment card smart contract;
storing the second digital currency in the second smart contract sub-wallet; and
canceling the first target prepayment card and the first smart contract sub-wallet.

To achieve the above purposes, a digital currency-based prepayment fund management apparatus is provided according to an eighth aspect of the embodiments of the present disclosure. The digital currency-based prepayment fund management apparatus in the embodiments of the present disclosure may be applied to a merchant operating agency, and include:
a gift request receiving module, configured to receive a gift request for a prepayment card corresponding to a prepayment fund, the gift request indicating an identifier of a first prepayment card to be gifted and user information of a giftee;
a second prepayment card determining module, configured to determine a first target prepayment card corresponding to the identifier of the first prepayment card to be gifted and a first smart contract sub-wallet corresponding to the first target prepayment card according to the gift request, where a second digital currency corresponding to the first target prepayment card is stored in the first smart contract sub-wallet, and the first smart contract sub-wallet is set in the merchant operating agency and is bound to a first prepayment card smart contract;
a gifting module, configured to send the identifier of the first prepayment card and the user information of the giftee to a gift smart contract pre-loaded according to the gift request to perform verification, and after determining that the verification passes, generate a second target prepayment card and a second smart contract sub-wallet according to the first target prepayment card, the second digital currency and the user information of the giftee, where the second smart contract sub-wallet is set in the merchant operating agency and is bound to second prepayment card smart contract; and store the second digital currency in the second smart contract sub-wallet;
a canceling module, configured to cancel the first target prepayment card and the first smart contract sub-wallet.

To achieve the above purposes, a digital currency-based prepayment fund management system is provided according to a ninth aspect of the embodiments of the present disclosure. The digital currency-based prepayment fund management system in the embodiments of the present disclosure includes: any digital currency-based prepayment fund management apparatus provided in the above eighth aspect, a merchant end and a user end back platform; where the merchant end or the user end back platform is configured to send a gift request for a prepayment card corresponding to a prepayment fund to the management apparatus, where the gift request indicates an identifier of a first prepayment card to be gifted and user information of a giftee.

To achieve the above purposes, a digital currency-based prepayment fund management method is provided according to a tenth aspect of the embodiments of the present disclosure. The digital currency-based prepayment fund management method in the embodiments of the present disclosure may be applied to a merchant operating agency, and include:
receiving a card return request for a prepayment card corresponding to a prepayment fund, where the card return request indicates an identifier of a prepayment card to be returned and card return information;
determining a target prepayment card corresponding to the identifier of the prepayment card and a smart contract sub-wallet corresponding to the target prepayment card according to the card return request; where a second digital currency corresponding to the target prepayment card is stored in the smart contract sub-wallet, and the smart contract sub-wallet is set in the merchant operating agency and is bound to a prepayment card smart contract; and
sending the card return information to the prepayment card smart contract for verification, and after determining that the verification passes by the prepayment card smart contract, generating an eleventh digital currency according to the card return information and the second digital currency, and storing the eleventh digital currency in a first digital currency wallet of a user.

To achieve the above purposes, a digital currency-based prepayment fund management apparatus is provided according to an eleventh aspect of the embodiments of the present disclosure. The digital currency-based prepayment fund management apparatus in the embodiments of the present disclosure may be applied to a merchant operating agency, and include: a card return request receiving module, configured to receive a card return request for a prepayment card corresponding to a prepayment fund, where the card return request indicates an identifier of a prepayment card to be returned and card return information;
a determining module, configured to determine a target prepayment card corresponding to the identifier of the prepayment card and a smart contract sub-wallet corresponding to the target prepayment card according to the card return request; where a second digital currency corresponding to the target prepayment card is stored in the smart contract sub-wallet, and the smart contract sub-wallet is set in the merchant operating agency and is bound to a prepayment card smart contract; and
a card return module, configured to send the card return information to the prepayment card smart contract for verification, and after determining that the verification passes by the prepayment card smart contract, generate an eleventh digital currency according to the card return information and the second digital currency, and store the eleventh digital currency in a first digital currency wallet of a user.

To achieve the above purposes, an electronic device for managing prepayment funds based on digital currencies is provided according to another aspect of the embodiments of the present disclosure. The electronic device for managing prepayment funds based on digital currencies in the embodiments of the present disclosure includes: one or more processors; and a storage apparatus, configured to store one or more programs; where the one or more programs, upon being executed by the one or more processors, cause the one or more processors to implement the digital currency-based prepayment fund management method in the embodiments of the present disclosure.

To achieve the above purposes, a computer-readable storage medium is provided according to yet another aspect of the embodiments of the present disclosure. The computer-readable storage medium in the embodiments of the present disclosure has stored a computer program thereon, where the program, upon being executed by a processor, implements the digital currency-based prepayment fund management method in the embodiments of the present disclosure.

The further effects of the above-mentioned non-conventional optional methods will be described below in conjunction with the detailed description.

### BRIEF DESCRIPTION OF THE DRAWINGS

The drawings are used for a better understanding of the present disclosure, and do not constitute an improper limitation of the present disclosure, where:
FIG. 1 is a schematic diagram of main steps of a generation method for a digital currency-based prepayment card according to the embodiments of the present disclosure;
FIG. 2 is a schematic diagram of main modules of a digital currency-based prepayment fund management apparatus according to the embodiments of the present disclosure;
FIG. 3 is a schematic diagram of main modules of a digital currency-based prepayment fund management system according to the embodiments of the present disclosure;
FIG. 4 is a schematic diagram of main steps of another digital currency-based prepayment fund management method according to the embodiments of the present disclosure;
FIG. 5 is a schematic diagram of a flow direction of digital currencies in a generation process of a prepayment card according to the embodiments of the present disclosure;
FIG. 6 is a schematic diagram of main steps of a usage method for a digital currency-based prepayment card according to the embodiments of the present disclosure;
FIG. 7 is a schematic diagram of a flow direction of digital currencies in a usage process of a prepayment card according to the embodiments of the present disclosure;
FIG. 8a is a schematic diagram of main steps of a commodity return method for a digital currency-based prepayment card according to the embodiments of the present disclosure;
FIG. 8b is a schematic diagram of main steps of another commodity return method for a digital currency-based prepayment card according to the embodiments of the present disclosure;
FIG. 9a is a schematic diagram of main steps of a recharge method for a digital currency-based prepayment card according to the embodiments of the present disclosure;
FIG. 9b is a schematic diagram of main steps of a recharge method for a digital currency-based prepayment card according to the embodiments of the present disclosure;
FIG. 10 is a schematic diagram of main modules of another digital currency-based prepayment fund management apparatus according to the embodiments of the present disclosure;
FIG. 11 is a schematic diagram of main modules of another digital currency-based prepayment fund management system according to the embodiments of the present disclosure;
FIG. 12 is a schematic diagram of main steps of a gift method for a digital currency-based prepayment card according to the embodiments of the present disclosure;
FIG. 13 is a schematic diagram of main modules of yet another digital currency-based prepayment fund management apparatus according to the embodiments of the present disclosure;
FIG. 14 is a schematic diagram of main modules of yet another digital currency-based prepayment fund management system according to the embodiments of the present disclosure;
FIG. 15 is a schematic diagram of main steps of another gift method for a digital currency-based prepayment card according to the embodiments of the present disclosure;
FIG. 16 is a schematic diagram of main steps of a cancellation method for a digital currency-based prepayment card according to the embodiments of the present disclosure;
FIG. 17 is a schematic diagram of main steps of another cancellation method for a digital currency-based prepayment card according to the embodiments of the present disclosure;
FIG. 18 is a schematic diagram of main modules of yet another digital currency-based prepayment fund management apparatus according to the embodiments of the present disclosure;
FIG. 19 is a schematic diagram of main modules of yet another digital currency-based prepayment fund management system according to the embodiments of the present disclosure;
FIG. 20 is an exemplary system architecture diagram in which the embodiments of the present disclosure may be applied; and
FIG. 21 is a structural schematic diagram of a computer system applicable for implementing the terminal device or the server in the embodiments of the present disclosure.

### DETAILED DESCRIPTION

Exemplary embodiments of the present disclosure are described below with reference to the drawings, include various details of the embodiments of the present disclosure to facilitate the understanding, and should be considered to be exemplary only. Therefore, those skilled in the art should realize that various changes and modifications may be made to the embodiments described herein without departing from the scope or spirit of the present disclosure. Similarly, for clarity and conciseness, descriptions of well-known functions and structures have been omitted from the following description.

It should be noted that, in a non-conflicting situation, the embodiments and the technical features in the embodiments of the present disclosure may be combined with each other.

First, terms in the embodiments of the present disclosure are explained below.

A merchant refers to an issuer of a prepayment card, also refers to a provider for providing commodities or services to a user.

A merchant operating agency refers to an operating agency that provides prepayment card services to the merchant.

A user operating agency refers to an operating agency of a wallet used by the user for payment when purchasing the prepayment card. The user operating agency and the merchant operating agency may be a same organization or different organizations.

A user refers to an individual who purchases the prepayment card. The user may communicate with the user operating agency by his or her user end (a mobile phone or a PC (personal computer), etc.).

For a smart contract sub-wallet, a prepayment card smart contract is bound to the sub-wallet for execution, and an ID (identifier) of the sub-wallet is associated with an ID of the prepayment card of the user correspondingly. The smart contract sub-wallet is opened in the merchant operating agency but belongs to the user. The fact that the user opens the sub-wallet in the merchant operating agency, does not mean that the user needs to open a parent wallet in the merchant operating agency. A digital currency in the smart contract sub-wallet does not belong to a target merchant, before the user completes a consumption in the target merchant.

A prepaid digital currency refers to a digital currency that the user transfers to the smart contract sub-wallet in advance before actual consumption. The transferring of the prepaid digital currency is controlled by the smart contract and the prepaid digital currency does not belong to the merchant before the consumption.

A target prepayment card refers to a record credential of rights and interests issued by the merchant when providing various types of prepayment consumptions.

An amount of rights and interests refers to an account balance for which the merchant records information of rights and interests for the user in the form of "amount of money" based on requirements of internal accounting and marketing. For example, for a taxi prepayment account of recharging 100 and obtaining gifted 100, there is a balance of 200 in the account, but this balance is not equivalent to the digital RMB.

A financial management account refers to an account opened within the merchant operating agency or on a financial management platform. After the user authorizes, the merchant operating agency implements financial management services of the smart contract sub-wallet by the financial management account.

A user end back platform receives prepayment card information synchronized by the merchant operating agency, by a prepayment fund management module, and supports for displaying a prepayment card list and basic list elements on a front-end.

Herein, the merchant is developed and managed by its corresponding merchant operating agency, and the digital currency prepaid by the user is stored in the smart contract sub-wallet of the merchant operating agency, and stored or transferred in accordance with a prepayment fund service agreement, where the storing or transferring is controlled by the prepayment card smart contract for the corresponding operation. If the merchant operating agency provides digital currency prepayment card services to the merchant, the merchant operating agency needs to sign a prepayment fund service agreement with the merchant and deploy a prepayment card smart contract. The merchant operating agency may check a transaction amount and a state of the smart contract sub-wallet by the prepayment card smart contract. The merchant operating agency may support a unilateral card return by the user, and the merchant operating agency may also support the user to query a remaining balance of rights and interests and related transaction records in the prepayment card. If the user has a question about a deduction operation of the merchant, the merchant operating agency may coordinate to resolve it.

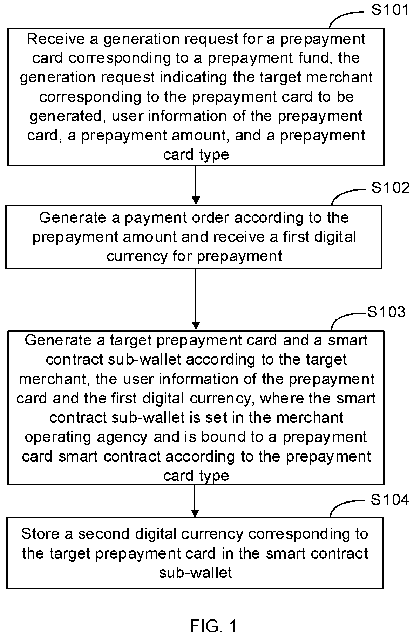

FIG. 1 is a schematic diagram of main steps of a digital currency-based prepayment fund management method according to the embodiments of the present disclosure. As shown in FIG. 1, the digital currency-based prepayment fund management method in the embodiments of the present disclosure may be applied to a merchant operating agency, the merchant operating agency signs a prepayment fund service agreement with a target merchant and deploys one or more prepayment card smart contracts, and the method mainly includes the following steps.

Step S101: receiving a generation request for a prepayment card corresponding to a prepayment fund, the generation request indicating the target merchant corresponding to the prepayment card to be generated, user information of the prepayment card, a prepayment amount, and a prepayment card type.

Step S102: generating a payment order according to the prepayment amount and receiving a first digital currency for prepayment.

Step S103: generating a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type.

Step S104: storing a second digital currency corresponding to the target prepayment card in the smart contract sub-wallet.

Before step S101, a merchant and the merchant operating agency may sign the prepayment fund service agreement, and the merchant operating agency may open a merchant digital currency wallet for the merchant. In addition, the merchant may also agree with the merchant operating agency on contractual rights and interests corresponding to the smart contract, for example, items of rights and interests with different types of rights and interests, such as full recharging and full deduction (e.g., recharging 1,000 and obtaining 1,000, and the prepayment card is deducted at original price at the time of consumption), or incremental recharging and discount deduction (e.g., recharging 900 and obtaining 1,000, and the prepayment card is deducted at a discount of 5% at the time of consumption), or the like. The merchant end may store and maintain usage credential information of the target prepayment card including the items of rights and interests by itself. In addition to the items of rights and interests, the usage credential information may include a usage method for rights and interests (such as deducting at a discount of 5%, or using the recharged principal first, or using the gifted amount first, or using the recharged principal and the gifted amount in proportion), and a remaining amount of rights and interests. Herein, the remaining amount of rights and interests may include a remaining amount corresponding to the gifted amount and a remaining amount corresponding to the recharged principal. After the prepayment card smart contract is signed, the merchant operating agency may send prepayment card information to a user end back platform. If the prepayment card information is updated, the merchant operating agency may also synchronize the updated prepayment card information with the user end back platform. The user end back platform may not provide sales services for the prepayment card, but the merchant or a channel entrusted by the merchant provides the sales services for the prepayment card. That is, the user may purchase the prepayment card from the merchant or the channel entrusted by the merchant.

In one embodiment of the present disclosure, a specific implementation of step S104 may include: calculating a deposit amount to be stored in the smart contract sub-wallet according to deposit configuration information and the prepayment amount; generating the second digital currency corresponding to the deposit amount, and storing the second digital currency in the smart contract sub-wallet.

In one implementation of the present disclosure, the deposit configuration information is pre-configured in the prepayment card smart contract; and/or the generation request carries the deposit configuration information. The deposit configuration information may include a deposit ratio or a deposit amount.

Since the second digital currency in the smart contract sub-wallet does not belong to the merchant, in order to prevent the merchant from misappropriating the second digital currency in advance, the second digital currency may be stored in the smart contract sub-wallet. For example, the deposit ratio or the deposit amount may be pre-configured in the prepayment card smart contract according to relevant laws and regulations, or agreements between the merchant, the merchant operating agency and the user, or may be carried when initiating the generation request for the prepayment card. It could be understood that the carried deposit ratio or deposit amount may also be agreed upon in advance by three parties: the merchant, the merchant operating agency and the user.

For example, in a case where the deposit ratio is 80%, if the prepayment amount is 100, the amount of the second digital currency corresponding to a storage amount is 80, which may be stored in the smart contract sub-wallet to prevent the merchant from misappropriating in advance. In addition, a third digital currency with an amount of 20 is in an available state and may be directly stored into a recipient wallet of the merchant (that is, a merchant digital currency wallet of the target merchant). For another example, in a case where the deposit amount is 70, the corresponding storage amount is also 70, and if the prepayment amount is 100, the digital currency of the amount of 70 is stored in the smart contract sub-wallet, and additionally, the digital currency of the amount of 30 is stored in the merchant digital currency wallet. That is, in another implementation of the present disclosure, the third digital currency in the available state is generated according to a difference between the prepayment amount and the second digital currency, and the third digital currency is stored in the merchant digital currency wallet of the target merchant.

In another embodiment of the present disclosure, the method further includes: determining a prepayment card type and a prepayment card quota according to the user information of the prepayment card indicated by the generation request for the prepayment card, where the user information of the prepayment card includes a user communication identifier corresponding to the prepayment card to be generated.

The user, when purchasing the prepayment card, may submit corresponding identity information according to the prepayment type. The prepayment card type may include: an anonymous prepayment card and a real-name prepayment card; where the real-name prepayment card may be further divided into a weak real-name prepayment card and a strong real-name prepayment card. When purchasing the anonymous prepayment card, the user only needs to provide the communication identifier (such as the user's mobile phone number); when purchasing the weak real-name prepayment card, the user needs to provide information such as the user communication identifier, a user name, and an identification card number, etc.; when purchasing the strong real-name prepayment card, the user needs to provide the user communication identifier, the user name, the identification card number, and biometric information (facial information, fingerprint information, and/or typing habits, etc.). In addition, different prepayment card categories also have different prepayment card quotas correspondingly, where a quota of the strong real-name prepayment card quota > a quota of the weak real-name prepayment card quota > a quota of the anonymous prepayment card. In one implementation of the present application, the user information and prepayment card quotas corresponding to various prepayment card categories may be shown in the following Table 1:

**Table 1**

| prepayment card type | User information of the prepayment card | Quota of the prepayment card |
|---|---|---|
| Anonymous prepayment card | User's Mobile Phone Number | 1000 |
| Weak real-name prepayment card | User's mobile phone number + name + identification card number | 50000 |
| Strong real-name prepayment card | User's mobile phone number + name + identification card number + facial information | 100000 |

Based on the user information of the prepayment card corresponding to different prepayment card categories, before generating the target prepayment card, the prepayment card type and the prepayment card quota may be determined according to the user information of the prepayment card indicated by the generation request for the prepayment card. For example, when the user information indicated by the generation request only includes the user's mobile phone number, the prepayment card type is determined to be the anonymous prepayment card, and the corresponding prepayment card quota is 1,000. In addition, if the user information indicated by the generation request does not match the prepayment card type, the merchant end may prompt the user to supplement the corresponding user information. For example, if the user information indicated by the generation request only includes the user's mobile phone number, but the indicated prepayment card type is the weak real-name prepayment card, the merchant end may prompt the user to further supplement real-name information such as name and identification card number, etc.

In addition, in order to reduce user operations and improve the user experience, in one implementation of the present disclosure, if the prepayment card type indicated by the generation request is the real-name prepayment card, the merchant operating agency may also obtain the corresponding user real-name information according to a real-name wallet corresponding to the user communication identifier, and there is no need for the user to re-enter the real-name information each time.

After obtaining the user real-name information, the merchant operating agency may perform real-name comparison for the user information. Only if the real-name information comparison passes, the user may be allowed to purchase the real-name prepayment card. The merchant operating agency, when performing the real-name comparison, may verify the real availability of the mobile phone number, and may also authenticate the user's facial information, to prevent the user from the fraudulent use of other people's real-name information to purchase. After the real-name authentication passes, a payment order corresponding to the generation request for the prepayment card may be generated, and a smart contract sub-wallet ID corresponding to the payment order may be generated. The merchant end then guides the user to complete the payment using the first digital currency, and shows a payment result. After the payment is completed, the merchant operating agency may generate the target prepayment card and the smart contract sub-wallet corresponding to the target merchant according to the user information of the prepayment card and the first digital currency, and associate the identifier of the smart contract sub-wallet (the smart contract sub-wallet ID) with a prepayment card identifier of the target prepayment card. Of course, if the payment fails, the merchant operating agency may set a pre-generated smart contract sub-wallet ID to be invalid. The smart contract sub-wallet corresponds to the target prepayment card correspondingly. The smart contract sub-wallet ID may be used as the prepayment card identifier of the target prepayment card, and according to the prepayment card identifier of the target prepayment card, changes in the remaining amount of rights and interests caused by operations of the target prepayment card such as subsequent consumption, recharging, commodity returning and card returning, etc., are stored correspondingly. It could be understood that the smart contract sub-wallet ID may include a code of the merchant operating agency and be unique within the merchant operating agency.

When storing the second digital currency, the second digital currency may be stored in the corresponding smart contract sub-wallet. After the second digital currency is stored in the smart contract sub-wallet, the merchant operating agency may bind the prepayment card smart contract in the smart contract sub-wallet. Subsequently, the second digital currency in the smart contract sub-wallet may be further transferred to a relevant financial management account based on the bound prepayment card smart contract.

In another embodiment of the present disclosure, according to the prepayment card identifier of the target prepayment card, a usage record, a recharge record, a commodity return record and/or a card return record of the target prepayment card are correspondingly stored.

After the card is purchased successfully, the merchant and the merchant operating agency may effectively preserve a user agreement. If the prepayment card smart contract fails to take effect, it returns that the user's purchase was unsuccessful, then the process may be terminated, and the merchant operating agency performs a process rollback. If the purchase is successful, in the subsequent process in which the user uses the target prepayment card, the merchant operating agency may correspondingly store the information such as the usage record, the recharge record, the commodity return record and/or the card return record, etc., according to the prepayment card identifier of the prepayment card.

In one embodiment of the present disclosure, after step S103, the method may further include: binding a user communication identifier to the prepayment card identifier of the target prepayment card, and sending a binding result to a user end back platform, so that the user end back platform establishes a binding relationship between the target prepayment card and target user information according to the user communication identifier and pre-stored user information. After storing any one of the usage record, the recharge record, the commodity return record, and/or the card return record, the method may further include: sending the prepayment card identifier and record information to the user end back platform, so that the user end back platform pushes the record information to a user end corresponding to the target user information according to the binding relationship.

As mentioned above, when purchasing the prepayment card, the user needs to provide identity information including the mobile phone number, etc. After the user purchases the prepayment card successfully, the merchant operating agency may bind the user communication identifier (such as the mobile phone number, etc.) to the target prepayment card and send the binding result to the user end back platform. For example, the merchant operating agency may generate index information corresponding to the target prepayment card, as a binding result. The index information may include: a payment wallet corresponding to the target prepayment card, a real-name wallet associated with the user, the prepayment card type, the user communication identifier, a merchant prepayment fund type (a unique number assigned by the merchant operating agency for the prepayment card issued by the merchant), the prepayment card identifier of the target prepayment card, a merchant identifier, a card purchase amount, an identifier of the merchant operating agency, a prepayment card state (being in gift, waiting to be collected, having been gifted, etc.), a generation time of the target prepayment card, and a validity period of the target prepayment card. If the prepayment card of the user is gifted by other people or is used to be gifted to other people, the index result may further include a field indicating whether the card is gifted, which is used as a prompt to indicate whether the card is gifted, and additionally, may include fields of a gifter's sub-wallet ID, a gifter's mobile phone number, and a gifted time, etc., so as to display the target prepayment card's information about the gift. Herein, the user communication identifier may be the mobile phone number of the user to whom the prepayment card belongs, and the mobile phone number is used for identity binding to the prepayment card. The prepayment card identifier refers to a unique number assigned by the merchant operating agency to the prepayment card issued by the merchant, which is unique within the merchant operating agency. In addition, the index result may further include a card number of a merchant prepayment card, which refers to a card number of a prepayment card assigned by the merchant to the target prepayment card. The user end back platform may associate the prepayment card type according to the prepayment card identifier. The identifier of the merchant operating agency is a unique number assigned by the merchant operating agency to the merchant and is unique within the merchant operating agency. The identifier of the merchant operating agency may be an operating agency code. The generation time of the target prepayment card may be determined according to a time when the payment time is successful, which is used for sorting multiple prepayment cards' display.

A management module at the user end back platform end may manage the index information. Specifically, the management module of the user end back platform may pre-associate a prepayment fund payment wallet with an account of the user end. When the user purchases the prepayment card on his or her own, the management module may perform association according to a wallet ID of the payment wallet; when the user receives the gift, the anonymous prepayment card and the real-name prepayment card may be associated by using the mobile phone number.

According to the above embodiments, after the target prepayment card is generated, the target prepayment card may be bound to the user communication identifier (such as the mobile phone number) by the merchant operating agency and/or the user end back platform. Herein, the user end corresponding to the user end back platform may be in the form of an APP (Application) or applet, and the merchant end may also be in the form of an APP or applet. If the binding is performed directly by the merchant operating agency, the merchant operating agency may send the binding result to the user end back platform, so that the user end back platform may bind the target prepayment card to registered target user information according to the binding result. Therefore, later in a life cycle of the target prepayment card, the user end back platform may push the usage record, the recharge record, the commodity return record, and/or the card return record of the prepayment card to the user end corresponding to the target user information, according to the binding relationship.

In another embodiment of the present disclosure, in a case where an amount of the first digital currency is greater than the prepayment amount, the method may further include: generating a fourth digital currency according to a difference between the first digital currency and the prepayment amount, and storing the fourth digital currency in a user digital currency wallet.

For example, when the amount of the first digital currency is 120 and the prepayment amount is 100, the amount of the first digital currency is greater than the prepayment amount. In this case, in addition to storing the corresponding digital currency in the smart contract sub-wallet and the merchant digital currency wallet according to the prepayment amount, the fourth digital currency is generated according to the difference (20) between the first digital currency and the prepayment amount, that is, the fourth digital currency is generated with an amount of 20, and the fourth digital currency is stored in the user digital currency wallet, to be returned to the user, so that the user may conduct other transactions according to the fourth digital currency in the available state. When the merchant operating agency and the user operating agency corresponding to the user digital currency wallet are different operating agencies, the merchant operating agency may communicate with the user operating agency, so that the user operating agency stores the fourth digital currency in the user digital currency wallet.

In another embodiment of the present disclosure, after step S103, the method may further include: sending the prepayment card identifier of the target prepayment card and a generation result to a merchant end, and sending a configuration prompt of the target prepayment card to the merchant end; receiving management information sent by the merchant end according to the configuration prompt, and the managing the target prepayment card according to the management information.

In one implementation of the present disclosure, the management information indicates any one or more of: a payment password of the target prepayment card, a setting end of the payment password, a management end of the target prepayment card, a responsible end of an invalid transaction corresponding to the target prepayment card and usage credential information of the target prepayment card; where the usage credential information includes: an item of rights and interests, a usage method of rights and interests and/or a remaining amount of rights and interests.

Herein, the merchant may agree with the merchant operating agency on information such as a name of the prepayment card to be issued, a flag (such as a logo) and a merchant name, etc. After generating the target prepayment card, the merchant operating agency may agree with the merchant whether to set a payment password for the prepayment card, and which party of the merchant or the merchant operating agency provides a password setting (setting end) and safekeeping services (management end), and agree on share responsibilities for the denial transaction for the user (responsibility end). In addition, the merchant end may further maintain the usage credential information of the target prepayment card by itself, such as the item of rights and interests, the usage method of rights and interests and/or the remaining amount of rights and interests. For example, the item of rights and interests may be: recharging 1000 and obtaining 1000, deduction at a discount of 10% when the prepayment card is consumed, or recharging 900 and obtaining 1000, deduction at a discount of 5% when the prepayment card is consumed, etc. The usage method of rights and interests may be first using the recharged principal, or first using the gifted amount, or using both the recharged principal and the gifted amount in proportion. Taking the above of recharging 900 and obtaining 1000 as an example, 900 is the recharged principal and 100 is the gifted amount; the remaining amount of rights and interests may include the remaining amount corresponding to the gifted amount and the remaining amount corresponding to the recharged principal.

In another embodiment of the present disclosure, the method may further include: transferring the second digital currency in the smart contract sub-wallet to a financial management account according to the smart contract, and determining an owner of a financial management amount obtained from the financial management account according to a financial management income end indicated by the prepayment card smart contract.

Herein, the financial management account may be set in the merchant operating agency. If the financial management account is within the merchant operating agency, the merchant operating agency may directly transfer the second digital currency to the financial management account according to the prepayment card smart contract. If the financial management account is an account on another financial management platform, the merchant operating agency may transfer the second digital currency in the smart contract sub-wallet to a financial management platform corresponding to the financial management account, and transfer the second digital currency from the financial management platform to the financial management account.

When the user purchases the prepayment card, the merchant operating agency should sign a tripartite agreement with the user and the merchant, to agree on that the fund corresponding to the prepayment card shall be given to the merchant operating agency for the deposit, and agree on rights and responsibilities of each party in the processes of triggering the generation, usage and card return, etc., of the prepayment card according to the smart contract; and further to agree on that the digital currency in the smart contract sub-wallet is available for the financial management within a limited scope, and agree on an owner of financial management income and losses, for example, that the financial management income belongs to the merchant and the losses are borne by the merchant. Therefore, after storing the second digital currency in the smart contract sub-wallet, the second digital currency in the smart contract sub-wallet may be transferred to the financial management account, which is conducive to increasing the income of the escrowed fund and thus protecting the merchant's rights and interests.

It can be seen from the generation method for the digital currency-based prepayment card according to the embodiments of the present disclosure that: through a prepayment fund service agreement between a merchant operating agency and a target merchant, and deploying a prepayment card smart contract in the merchant operating agency, after the merchant operating agency receives a generation request for a prepayment card, a payment order may be generated according to a prepayment amount to enable a user to pay, thus to receive a first digital currency used for prepayment. Then, a target prepayment card and a smart contract sub-wallet are generated according to the target merchant, user information of the prepayment card and the first digital currency. The smart contract sub-wallet is opened in the merchant operating agency, but belongs to the user, and is bound to the target prepayment card of the user correspondingly, the prepayment card smart contract is bound to the smart contract sub-wallet for execution. Therefore, a second digital currency corresponding to the target prepayment card is stored in the smart contract sub-wallet, and the second digital currency in the wallet does not belong to the target merchant as well, so that the target merchant cannot misappropriate the second digital currency in advance, thereby improving the transaction security of the prepayment card, which is beneficial to protecting rights and interests of the user.

In addition, the escrowed wallet smart contract sub-wallet is set in the merchant operating agency, so that the merchant may communicate directly with its corresponding operating agency, which is convenient for deploying the smart contract, and also convenient for storing the second digital currency in the escrowed wallet smart contract sub-wallet to the financial management account by the same operating agency, which is thus beneficial to improving the merchant's rights and interests.

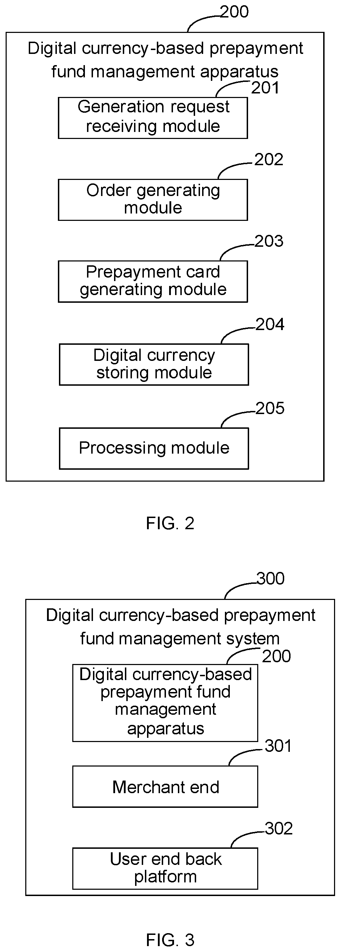

FIG. 2 is a schematic diagram of main modules of a digital currency-based prepayment fund management apparatus according to the embodiments of the present disclosure. As shown in FIG. 2, the digital currency-based prepayment fund management apparatus 200 in the embodiment of the present disclosure may be applied to a merchant operating agency, the merchant operating agency signs a prepayment fund service agreement with a target merchant and deploys one or more prepayment card smart contracts, and the apparatus 200 includes: a generation request receiving module 201, an order generating module 202, a prepayment card generating module 203 and a digital currency storing module 204; where
the generation request receiving module 201 is configured to receive a generation request for a prepayment card corresponding to a prepayment fund, the generation request indicating the target merchant corresponding to the prepayment card to be generated, user information of the prepayment card, a prepayment amount, and a prepayment card type;
the order generating module 202 is configured to generate a payment order according to the prepayment amount and receive a first digital currency for prepayment;
the prepayment card generating module 203 is configured to generate a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and
the digital currency storing module 204 is configured to store a second digital currency corresponding to the target prepayment card in the smart contract sub-wallet.

In one embodiment of the present disclosure, the digital currency storing module 204 is configured to calculate a deposit amount to be stored in the smart contract sub-wallet according to deposit configuration information and the prepayment amount; generate the second digital currency corresponding to the deposit amount, and store the second digital currency in the smart contract sub-wallet.

In another embodiment of the present disclosure, the deposit configuration information includes: a deposit ratio or a deposit amount.

In another embodiment of the present disclosure, the deposit configuration information is pre-configured in the prepayment card smart contract; and/or the generation request carries the deposit configuration information.

In one embodiment of the present disclosure, the digital currency storing module 204 is further configured to generate a third digital currency according to a difference between the prepayment amount and the second digital currency, and store the third digital currency in a merchant digital currency wallet of the target merchant.

In another embodiment of the present disclosure, the prepayment card generating module 203 is configured to determine a prepayment card type and a prepayment card quota according to the user information of the prepayment card indicated by the generation request for the prepayment card, where the user information of the prepayment card includes a user communication identifier corresponding to the prepayment card to be generated.

In another embodiment of the present disclosure, the user information of the prepayment card further includes user real-name information, and the user real-name information is obtained according to a real-name wallet corresponding to the user communication identifier.

In one embodiment of the present disclosure, an identifier of the smart contract sub-wallet is associated with a prepayment card identifier of the target prepayment card

In another embodiment of the present disclosure, continuing to refer to FIG. 2, the apparatus may further include: a processing module 205; where the processing module 205 is configured to store a usage record, a recharge record, a commodity return record and/or a card return record of the target prepayment card correspondingly according to the prepayment card identifier of the target prepayment card.

In another embodiment of the present disclosure, the processing module 205 is further configured to bind a user communication identifier to the prepayment card identifier of the target prepayment card, and send a binding result to a user end back platform, so that the user end back platform establishes a binding relationship between the target prepayment card and target user information according to the user communication identifier and pre-stored user information.

In another embodiment of the present disclosure, the processing module 205 is further configured to send the prepayment card identifier and record information to the user end back platform, so that the user end back platform pushes the record information to a user end corresponding to the target user information according to the binding relationship.

In another embodiment of the present disclosure, the binding result includes: the user communication identifier, the prepayment card identifier of the target prepayment card, a merchant identifier, an identifier of the merchant operating agency, and a generation time of the target prepayment card.

In another embodiment of the present disclosure, in a case where an amount of the first digital currency is greater than the prepayment amount, the digital currency storing module 204 is further configured to generate a fourth digital currency according to a difference between the first digital currency and the prepayment amount, and store the fourth digital currency in a user digital currency wallet.

In another embodiment of the present disclosure, the processing module 205 is further configured to: after generating the target prepayment card, send the prepayment card identifier of the target prepayment card and a generation result to a merchant end, and send a configuration prompt of the target prepayment card to the merchant end; and receive management information sent by the merchant end according to the configuration prompt, and the manage the target prepayment card according to the management information.

In another embodiment of the present disclosure, the management information indicates any one or more of: a payment password of the target prepayment card, a setting end of the payment password, a management end of the target prepayment card, a responsible end of an invalid transaction corresponding to the target prepayment card and usage credential information of the target prepayment card; where the usage credential information includes: an item of rights and interests, a usage method of rights and interests and/or a remaining amount of rights and interests.

In another embodiment of the present disclosure, the processing module 205 is further configured to transfer the second digital currency in the smart contract sub-wallet to a financial management account according to the prepayment card smart contract, and determine an owner of a financial management amount obtained from the financial management account according to a financial management income end indicated by the prepayment card smart contract.

In another embodiment of the present disclosure, the processing module 205 is configured to transfer the second digital currency in the smart contract sub-wallet to a financial management platform corresponding to the financial management account, and transfer the second digital currency from the financial management platform to the financial management account.

It can be seen from the digital currency-based prepayment fund management apparatus according to the embodiments of the present disclosure that: through a prepayment fund service agreement between a merchant operating agency and a target merchant, and deploying a prepayment card smart contract in the merchant operating agency, after the merchant operating agency receives a generation request for a prepayment card, a payment order may be generated according to a prepayment amount to enable a user to pay, thus to receive a first digital currency used for prepayment. Then, a target prepayment card and a smart contract sub-wallet are generated according to the target merchant, user information of the prepayment card and the first digital currency. The smart contract sub-wallet is opened in the merchant operating agency, but belongs to the user, and is bound to the target prepayment card of the user correspondingly, the prepayment card smart contract is bound to the smart contract sub-wallet for execution. Therefore, a second digital currency corresponding to the target prepayment card is stored in the smart contract sub-wallet, and the second digital currency in the wallet does not belong to the target merchant as well, so that the target merchant cannot misappropriate the second digital currency in advance, thereby improving the transaction security of the prepayment card, which is beneficial to protecting rights and interests of the user.

In addition, the smart contract sub-wallet is set in the merchant operating agency, so that the merchant may communicate directly with its corresponding operating agency, which is convenient for storing the second digital currency in the smart contract sub-wallet to the financial management account by the same operating agency, which is thus beneficial to improving the merchant's rights and interests.

FIG. 3 is a schematic diagram of main modules of a digital currency-based prepayment fund management system according to the embodiments of the present disclosure.

As shown in FIG. 3, the digital currency-based prepayment fund management system 300 in the embodiment of the present disclosure may include: a merchant end 301 and a digital currency-based prepayment fund management apparatus 200 provided in any of the above embodiments, the apparatus may be applied to a merchant operating agency; where the merchant end 301 includes a merchant digital currency wallet;
the merchant end 301 is configured to send a generation request for a prepayment card to the management apparatus according to a trigger of a user, and the generation request indicates the target merchant corresponding to the prepayment card to be generated, user information of the prepayment card, a prepayment amount, and a prepayment card type; and
the management apparatus 300 is configured to generate a payment order according to the prepayment amount and receive a first digital currency for prepayment; generate a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and store a second digital currency corresponding to the target prepayment card in the smart contract sub-wallet.

In one embodiment of the present disclosure, the merchant end 301 is also configured to record management information of the target prepayment card, and the management information indicates any one or more of: a payment password of the target prepayment card, a setting end of the payment password, a management end of the target prepayment card, a responsible end of an invalid transaction corresponding to the target prepayment card and usage credential information of the target prepayment card; where the usage credential information includes: an item of rights and interests, a usage method of rights and interests and/or a remaining amount of rights and interests.

For example, the item of rights and interests may be: recharging 1000 and obtaining 1000, deduction at a discount of 10% when the prepayment card is consumed, or recharging 900 and obtaining 1000, deduction at a discount of 5% when the prepayment card is consumed, etc. The usage method of rights and interests may be first using the recharged principal, or first using the gifted amount, or using both the recharged principal and the gifted amount in proportion. Taking the above of recharging 900 and obtaining 1000 as an example, 900 is the recharged principal and 100 is the gifted amount; the remaining amount of rights and interests may include the remaining amount corresponding to the gifted amount and the remaining amount corresponding to the recharged principal.

In one embodiment of the present disclosure, as shown in FIG. 3, the system may further include: a user end back platform 302; where
the management apparatus 200 is further configured to bind a user communication identifier to a prepayment card identifier of the target prepayment card, and send a binding result to the user end back platform; send the prepayment card identifier and record information to the user end back platform after storing any one of a usage record, a recharge record, a commodity return record, and/or a card return record corresponding to the target prepayment card; and
the user end back platform 302 is configured to bind the target prepayment card to target user information according to the user communication identifier and pre-stored user information; push the record information to a user end corresponding to the target user information, according to a binding relationship.

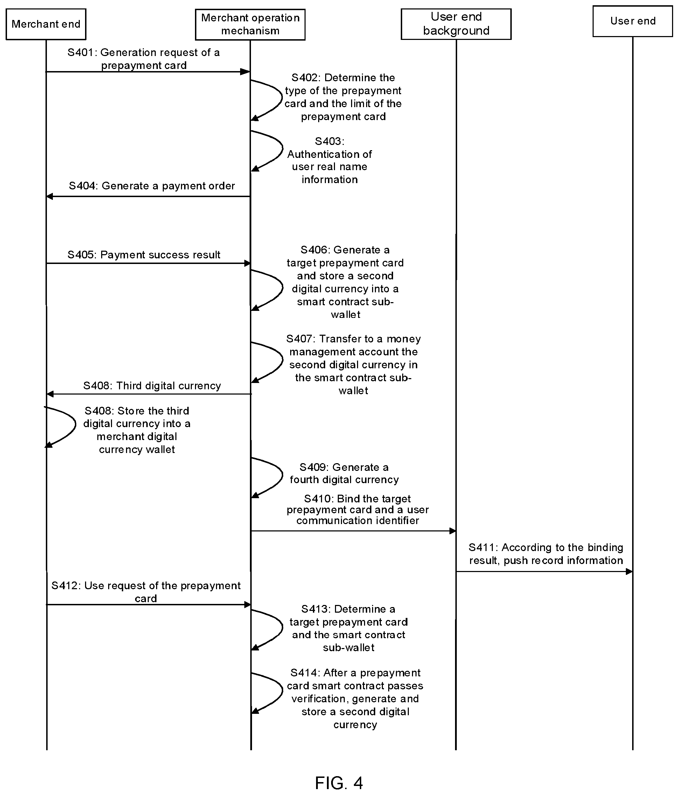

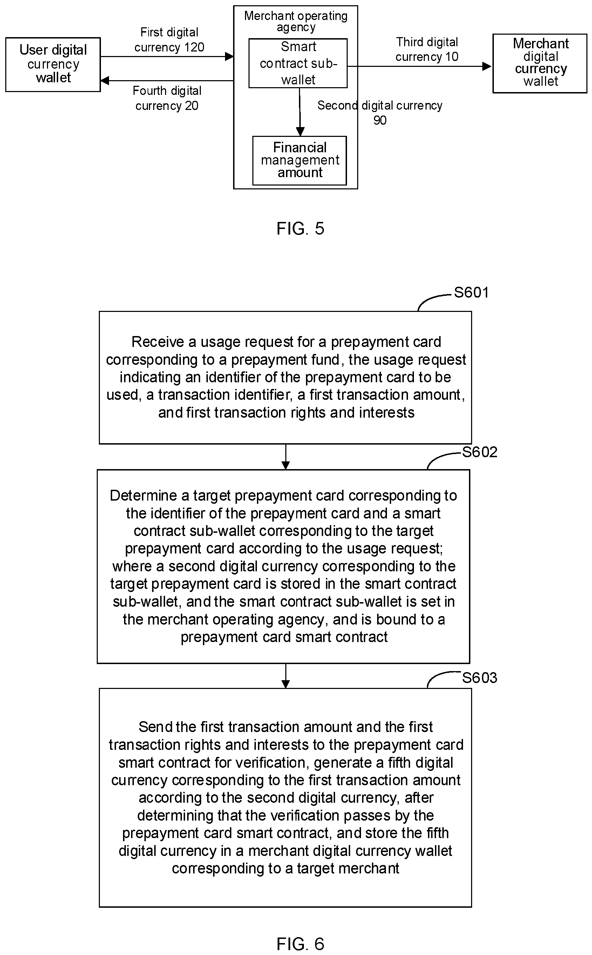

The following takes the above-mentioned digital currency-based prepayment fund management system as an example to explain the digital currency-based prepayment fund management method provided in the embodiments of the present disclosure in detail. The method may include steps shown in FIG. 4, and a corresponding digital currency flow direction may be shown in FIG. 5.

Step S401: a merchant end sends a generation request for a prepayment card to a prepayment fund management apparatus (a merchant operating agency) according to a trigger of a user.

In the step, the user triggers an ordering operation of the prepayment card in an APP (the merchant end) of a certain e-commerce platform, and then the merchant end sends the generation request for the prepayment card to the merchant operating agency corresponding to the merchant end, accordingly. The generation request indicates the target merchant corresponding to the prepayment card to be generated, user information of the prepayment card, a prepayment amount, and a prepayment card type.

Step S402: the merchant operating agency determines a prepayment card type and a prepayment card quota according to the generation request for the prepayment card.

Step S403: in a case where the prepayment card type is a real-name prepayment card, the merchant operating agency obtains user real-name information and authenticates the user real-name information. In a case where the authentication passes, step S404 is performed, otherwise, prompt information of the unsuccessful real-name is output to the merchant end, to prompt the user whether to purchase an anonymous prepayment card or prompt the end of the current process.

The merchant operating agency may obtain the user real-name information by a real-name wallet of the user, or may also prompt the user to input the corresponding real-name information by the merchant end.

It could be understood that when the user wants to purchase the prepayment card of the target merchant, the target merchant may provide a corresponding prompt by a page of the merchant end, to guide the user to fill in user information such as the mobile phone number, name, certificate type (identification card and passport, etc.) or certificate number, etc. The merchant end then sends the user information to the merchant operating agency, so that the merchant operating agency may perform the real-name authentication on the user. Only the real-name authenticated user can purchase the real-name prepayment card. If the real-name authentication fails, the merchant end prompts that the real-name authentication fails, and prompts the user whether to purchase an anonymous prepayment card, and if the user does not purchase the anonymous prepayment card, the current process ends.

Step S404: after the real-name authentication is successful, the merchant operating agency generates a payment order and prompts the user to pay for the payment order by the merchant end.

Step S405: after determining that the payment order is paid successfully, the merchant end notifies a result of the successful payment to the merchant operating agency.

If the merchant end determines that the payment fails, the merchant end may enter a payment failure processing process, such as prompting the user to pay again or directly ending the current process.

Step S406: the merchant operating agency generates a smart contract sub-wallet and a target prepayment card according to the first digital currency used for payment, the target merchant and the user information of the prepayment card, and stores the second digital currency corresponding to the target prepayment card in the smart contract sub-wallet.

Step S407: the merchant operating agency transfers the second digital currency in the smart contract sub-wallet to a financial management account, and determines an owner of a financial management amount of the financial management account.

Herein, the owner of the financial management amount may be determined according to a financial management income end predetermined by the prepayment card smart contract. For example, the merchant is determined as the owner of the financial management amount, or the user may be determined as the owner of the financial management amount. In a preferred embodiment of the present disclosure, in order to increase the enthusiasm of the merchant to issue prepayment cards and to protect the merchant's rights and interests, the merchant may be determined as the owner of the financial management amount.

Step S408: the merchant operating agency generates a third digital currency according to a difference between the prepayment amount and the second digital currency, and sends the third digital currency to the merchant end, so that the merchant end stores the third digital currency in the merchant digital currency wallet of the target merchant.

Step S409: the merchant operating agency generates a fourth digital currency according to a difference between the first digital currency and the prepayment amount, and sends the fourth digital currency to a user operating agency, so that the user operating agency stores the fourth digital currency in the user digital currency wallet. Herein, the user operating agency and the user end back platform may be the same back platform or different back platforms.

In the process of step S406 to step S409, taking the amount of the first digital currency of 120, the prepayment amount of 100, and the deposit ratio included in the deposit configuration information of 90% as an example, a flow direction of the digital currency may be shown in FIG. 5.

The first digital currency with the amount of 120 flows from the user digital currency wallet to the merchant operating agency by step S406, and then the second digital currency with the amount of 90 flows to the smart contract sub-wallet, and then flows from the smart contract sub-wallet to the financial management account; the third digital currency with the amount of 10 flows to the merchant digital currency wallet; the fourth digital currency with the amount of 20 flows back to the user digital currency wallet.

Step S410: the merchant operating agency binds the user communication identifier to the target prepayment card and sends a binding result to the user end back platform.

The binding step may also be performed by the user end back platform, that is, the target prepayment card may be bound with the user communication identifier by the user end back platform.

Step S411: the user end back platform saves the binding result, and when receiving the record information of the target prepayment card, pushes the record information to the user end according to the binding result.

Herein, the record information includes the usage record, recharge record, commodity return record and card return record of the target prepayment card.

It can be seen from the digital currency-based prepayment fund management system according to the embodiments of the present disclosure that, through a prepayment fund service agreement between a merchant operating agency and a target merchant, and deploying a prepayment card smart contract in the merchant operating agency, after the merchant operating agency receives a generation request for a prepayment card, a payment order may be generated according to a prepayment amount to enable a user to pay, thus to receive a first digital currency used for prepayment. Then, a target prepayment card and a smart contract sub-wallet are generated according to the target merchant, user information of the prepayment card and the first digital currency. The smart contract sub-wallet is opened in the merchant operating agency, but belongs to the user, and is bound to the target prepayment card of the user correspondingly, the prepayment card smart contract is bound to the smart contract sub-wallet for execution. Therefore, a second digital currency corresponding to the target prepayment card is stored in the smart contract sub-wallet, and the second digital currency in the wallet does not belong to the target merchant as well, so that the target merchant cannot misappropriate the second digital currency in advance, thereby improving the transaction security of the prepayment card, which is beneficial to protecting rights and interests of the user.

In addition, the smart contract sub-wallet is set in the merchant operating agency, so that the merchant may communicate directly with its corresponding operating agency, thereby facilitating the storage of the second digital currency in the smart contract sub-wallet into a financial management account by the same operating agency, which is beneficial to improving rights and interests of the merchant.

In addition, the embodiments of the present invention also provide another digital currency-based prepayment fund management method. The digital currency-based prepayment fund management method provided in the embodiments of the present invention includes consumption, recharge and commodity return of a prepayment card. When the user consumes, the user may initiate a usage request by a merchant end (such as a merchant applet). The merchant operating agency may execute a consumption process based on the prepayment card smart contract to transfer a digital currency corresponding to a first transaction amount from the financial management account to the merchant digital currency wallet through the smart contract sub-wallet. When the user needs to recharge the prepayment card, the user may initiate a recharge request by the user end or the merchant end. The successfully recharged amount is automatically transferred to the smart contract sub-wallet, and may be further transferred from the smart contract sub-wallet to the financial management account. The commodity return means that a user requests a refund for a certain transaction. If the refund occurs after a negotiation between the user and the merchant, the merchant operating agency may return the corresponding digital currency from the merchant digital currency wallet to the smart contract sub-wallet, and the corresponding digital currency may further be transferred from the smart contract sub-wallet to the financial management account. In addition, when the user needs to return the card, a withdrawable quota may be withdrawn. For example, if the user unilaterally initiates the card return, the merchant operating agency may transfer the digital currency from the financial management account to the smart contract sub-wallet and return the digital currency to the user digital currency wallet. Or, if the user returns the card after negotiating with the merchant, the merchant may initiate the card return request. In addition, if the prepayment card needs to be canceled due to a case of card expiration, or closure of the merchant due to poor business practices, etc., the digital currency may also be transferred from the financial management account back to the smart contract sub-wallet and then returned back to the user digital currency wallet.

FIG. 6 is a schematic diagram of main steps of a digital currency-based prepayment fund management method according to the embodiments of the present disclosure. As shown in FIG. 6, the digital currency-based prepayment fund management method in the embodiments of the present disclosure may be applied to a merchant operating agency, and mainly include the following steps.

Step S601: receiving a usage request for a prepayment card corresponding to a prepayment fund, the usage request indicating an identifier of the prepayment card to be used, a transaction identifier, a first transaction amount, and first transaction rights and interests.

Step S602: determining a target prepayment card corresponding to the identifier of the prepayment card and a smart contract sub-wallet corresponding to the target prepayment card according to the usage request; where a second digital currency corresponding to the target prepayment card is stored in the smart contract sub-wallet, and the smart contract sub-wallet is set in the merchant operating agency, and is bound to a prepayment card smart contract.

Step S603: sending the first transaction amount and the first transaction rights and interests to the prepayment card smart contract for verification, generating a fifth digital currency corresponding to the first transaction amount according to the second digital currency, after determining that the verification passes by the prepayment card smart contract, and storing the fifth digital currency in a merchant digital currency wallet corresponding to a target merchant.

It could be understood that before using the target prepayment card, the merchant operating agency may generate the target prepayment card and store the second digital currency according to the generation request for the prepayment card. In one embodiment of the present disclosure, the generation process of the target prepayment card may be shown in FIG. 4, and the corresponding flow direction of the digital currency may be shown in FIG. 5.

After the target prepayment card is generated, the user may further use the target prepayment card for consumption. Continuing to refer to FIG. 4, the consumption process by using the target prepayment card may include the following steps:
Step S412: the merchant end sends the usage request for the prepayment card corresponding to the prepayment fund to the merchant operating agency according to a trigger of the user.
   For example, when the user consumes in the APP (the merchant end) of an e-commerce platform, the user may choose to pay by the target prepayment card. At this time, the merchant end may send the usage request for the prepayment card corresponding to the prepayment fund to the merchant operating agency. Herein, the usage request for the prepayment card indicates the identifier of the prepayment card to be used, the transaction identifier, the first transaction amount, and the first transaction rights and interests.
Step S413: the merchant operating agency determines the target prepayment card corresponding to the identifier of the prepayment card and the smart contract sub-wallet corresponding to the target prepayment card according to the usage request.
Step S414: the merchant operating agency sends the first transaction amount and the first transaction rights and interests to the prepayment card smart contract for verification, and after the prepayment card smart contract determines that the verification passes, generates the fifth digital currency corresponding to the first transaction amount according to the second digital currency, and stores the fifth digital currency in the merchant digital currency wallet corresponding to the target merchant.

In one embodiment of the present disclosure, after each consumption, a new second digital currency may be generated according to a difference between the second digital currency and the fifth digital currency, and the new second digital currency may be stored in the smart contract sub-wallet.

For example, the amount of the second digital currency corresponding to the prepayment card before the consumption is 100, and the first transaction amount used at this time is 20, that is, the generated amount of the fifth digital currency is 20, then according to the difference between the second digital currency and the fifth digital currency, a new second digital currency with an amount of 80 is generated.

In one embodiment of the present disclosure, the second digital currency corresponding to the target prepayment card may be stored in the financial management account via the smart contract sub-wallet; while the fifth digital currency is generated according to the first transaction amount, the new second digital currency may also be stored in the financial management account via the smart contract sub-wallet. In addition, the owner of the financial management amount obtained from the financial management account may also be determined according to the financial management income end indicated by the prepayment card smart contract.

Herein, the financial management account may be set in the merchant operating agency. If the financial management account is within the merchant operating agency, the merchant operating agency may directly transfer the second digital currency from the smart contract sub-wallet to the financial management account according to the prepayment card smart contract. If the financial management account is an account on another financial management platform, the merchant operating agency may transfer the second digital currency in the smart contract sub-wallet to a financial management platform corresponding to the financial management account, and transfer the second digital currency from the financial management platform to the financial management account.

When the user purchases the prepayment card, the merchant operating agency should sign a tripartite agreement with the user and the merchant, to agree on that the fund corresponding to the prepayment card shall be given to the merchant operating agency for the deposit, and rights and responsibilities of each party in the processes of agreeing the generation, usage and card return, etc., of the prepayment card according to the prepayment card smart contract; and further to agree on that the digital currency in the smart contract sub-wallet is available for the financial management within a limited scope, and agree on an owner of financial management income and losses, for example, agree on that the financial management income belongs to the merchant and the losses are borne by the merchant. Therefore, after storing the second digital currency in the smart contract sub-wallet, the second digital currency in the smart contract sub-wallet may be transferred to the financial management account, which is conducive to increasing the income of the escrowed fund and thus protecting the merchant's rights and interests.

In one embodiment of the present disclosure, a specific implementation of step S603 may be: performing the verification on the first transaction amount and the first transaction rights and interests according to an amount calculation parameter and deposit configuration information corresponding to the target prepayment card, where the deposit configuration information and the amount calculation parameter are pre-configured in the prepayment card smart contract.

Before generating the target prepayment card, the merchant and the merchant operating agency may sign a prepayment fund service agreement, and the merchant operating agency records a merchant digital currency wallet used by the merchant for receiving payments. In addition, the merchant may further agree with the merchant operating agency on transaction rights and interests corresponding to the prepayment card smart contract, such as items of rights and interests with different types, such as full recharging and full deduction (e.g., recharging 1,000 and obtaining 1,000, and the prepayment card is deducted at original price at the time of consumption), or incremental recharging and discount deduction (e.g., recharging 900 and obtaining 1,000, and the prepayment card is deducted at a discount of 5% at the time of consumption), or the like. The merchant end may store and maintain usage credential information of the target prepayment card including the items of rights and interests by itself. In addition to the items of rights and interests, the usage credential information may include a usage method for rights and interests (such as deducting at a discount of 5%, or using the recharged principal first, or using the gifted amount first, or using the recharged principal and the gifted amount in proportion), and a remaining amount of rights and interests. Herein, the remaining amount of rights and interests may include a remaining amount corresponding to the gifted amount and a remaining amount corresponding to the recharged principal.

Herein, the deposit configuration information includes: a deposit ratio or a deposit amount. The amount calculation parameter is related to the item of rights and interests and the usage method of rights and interests of the target prepayment card, etc. In the generation process of the target prepayment card as shown in FIG. 4, the prepayment amount may be stored in the merchant digital currency wallet and the smart contract sub-wallet respectively (the amount of the smart contract sub-wallet may be further transferred to the financial management account) according to the deposit ratio or the deposit amount. Therefore, in the process of using (consuming) the target prepayment card, the prepayment card smart contract may also verify the first transaction amount and the first transaction rights and interests according to the deposit ratio or the deposit amount. Specifically, the prepayment card smart contract may verify whether the deduction for the first transaction amount and the first transaction rights and interests is within an agreed range of the target prepayment card, and may further verify whether the smart contract sub-wallet is in a tradable state, and whether a transaction token is correct, etc. For example, the first transaction rights and interests are: deduction at a discount of 5% when the prepayment card is consumed. Then, the prepayment card smart contract may verify whether the first transaction rights and interests match the amount calculation parameter. If the amount calculation parameter is 0.95, the prepayment card smart contract may determine that the verification for the first transaction rights and interests passes. If the first transaction amount is 20, the prepayment card smart contract may determine whether a digital currency balance of the target prepayment card is not less than 20 according to the deposit configuration information and the amount calculation parameter, and if so, the prepayment card smart contract may determine that the verification for the first transaction amount passes.

After the verification passes, if the execution of the prepayment card smart contract is successful and the smart contract sub-wallet is deducted successfully, then this consumption of the prepayment card is successful. In a case where the merchant digital currency wallet does not receive the fifth digital currency at this time, this case may be treated as a pending account, and the merchant operating agency may contact the merchant for processing. If the execution of the prepayment card smart contract fails, this consumption result may be a failure. Of course, in the case where the consumption fails, the merchant operating agency may perform a rollback operation and notify the merchant end and the user end back platform.

In the above embodiments, a service field included in the usage request may also include: a usage condition of the prepayment card to be used, and the usage condition may refer to a usage scenario and a specific merchant, etc. For example, if the prepayment card smart contract indicates a scenario identifier of the target prepayment card, then whether the usage information matches the usage condition indicated by the smart contract, may be determined according to whether the usage information includes the corresponding scenario identifier. Herein, the scenario identifier corresponds to the specific scenario, and different scenarios have different scenario identifiers. For example, a transportation scenario and an entertainment scenario have different scenario identifiers. When a prepaid digital currency is used to pay a specific merchant in a certain scenario, the corresponding scenario identifier is carried when the usage request is sent, so that the prepayment card smart contract may determine whether the usage request is directed to the corresponding prepayment scenario correctly, according to the scenario identifier. Only when the usage information matches the usage condition indicated by the smart contract, the prepayment card smart contract may determine that the verification passes, and then the merchant operating agency may generate the fifth digital currency according to the first transaction amount. That is, at this time, the merchant operating agency allows this consumption, thereby improving the usage security of the target prepayment card.

As described above, in one embodiment of the present disclosure, the second digital currency corresponding to the target prepayment card may be transferred to the financial management account via the smart contract sub-wallet. In this case, a specific implementation of step S603 may include: transferring a digital currency corresponding to the first transaction amount from the financial management account to the smart contract sub-wallet; and generating the fifth digital currency according to the digital currency in the smart contract sub-wallet.

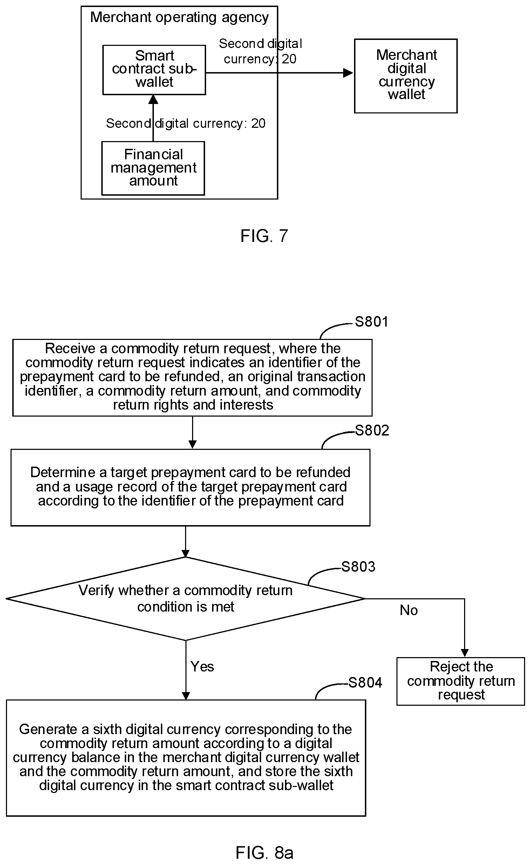

In this example, during the usage process of the target prepayment card, the digital currency is transferred from the financial management account back to the smart contract sub-wallet, and then transferred to the merchant digital currency wallet via the smart contract sub-wallet. Taking the first consumption amount of 20 as an example, the flow direction of the digital currency in the usage process of the target prepayment card may be shown in FIG. 7.

In another embodiment of the present disclosure, after step S603, the method may further include: correspondingly storing the identifier of the prepayment card and any one or more of: a usage record, a recharge record, a commodity return record, or a card return record, and sending the identifier of the prepayment card and record information to the user end back platform, so that the user end back platform push the record information to a user end corresponding to target user information according to a binding relationship between a target prepayment card and the target user information.

After the user purchases the target prepayment card successfully, the merchant operating agency may store information, such as the usage record, the recharge record, the commodity return record and/or the card return record, etc., correspondingly according to the prepayment card identifier of the prepayment card. When the user purchases the prepayment card, the user needs to provide identity information such as the mobile phone number. After the user purchases the prepayment card successfully, the merchant operating agency may bind the user communication identifier (such as the mobile phone number) to the target prepayment card and send the binding result to the user end back platform. For example, the merchant operating agency may generate index information corresponding to the target prepayment card, as a binding result. The index information may include: a payment wallet corresponding to the target prepayment card, a real-name wallet associated with the user, the prepayment card type, the user communication identifier, a merchant prepayment fund type (a unique number assigned by the merchant operating agency for the prepayment card issued by the merchant), the identifier of the target prepayment card, a merchant identifier, a merchant card number, a card purchase amount, an identifier of the merchant operating agency, a prepayment card state (being in gift, waiting to be collected, having been gifted, etc.), a generation time of the target prepayment card, and a validity period of the target prepayment card. If the prepayment card of the user is gifted by other people or is used to be gifted to other people, the index result may further include a field indicating whether the card is gifted, which is used as a prompt to indicate whether the card is gifted, and additionally, may include fields of a gifter's sub-wallet ID, a gifter's mobile phone number, and a gifted time, etc., so as to display the target prepayment card's information about the gift. Herein, the user communication identifier may be the mobile phone number of the user to whom the prepayment card belongs, and the mobile phone number is used for identity binding to the prepayment card. The prepayment card identifier refers to a unique number assigned by the merchant operating agency to the prepayment card issued by the merchant, which is unique within the merchant operating agency. In addition, the index result may further include a card number of a merchant prepayment card, which refers to a card number of a prepayment card assigned by the merchant to the target prepayment card. The user end back platform may associate the prepayment card type according to the prepayment card identifier. The identifier of the merchant operating agency is a unique number assigned by the merchant operating agency to the merchant and is unique within the merchant operating agency. The identifier of the merchant operating agency may be an operating agency code. The generation time of the target prepayment card may be determined according to a time when the payment time is successful, which is used for sorting multiple prepayment cards' display.

A management module at the user end back platform end may manage the index information. Specifically, the management module of the user end back platform may pre-associate a prepayment fund payment wallet with an account of the user end. When the user purchases the prepayment card on his or her own, the management module may perform association according to a wallet ID of the payment wallet; when the user receives the gift, the anonymous prepayment card and the real-name prepayment card may be associated by using the mobile phone number.

According to the above embodiments, after the target prepayment card is generated, the target prepayment card may be bound to the user communication identifier (such as the mobile phone number) by the merchant operating agency and/or the user end back platform. Herein, the user end corresponding to the user end back platform may be in the form of an APP (Application) or applet, and the merchant end may also be in the form of an APP or applet. If the binding is performed directly by the merchant operating agency, the merchant operating agency may send the binding result to the user end back platform, so that the user end back platform may bind the target prepayment card to registered target user information according to the binding result. Therefore, later in a life cycle of the target prepayment card, the user end back platform may push the usage record, the recharge record, the commodity return record, and/or the card return record of the prepayment card, etc., to the user end corresponding to the target user information, according to the binding relationship. For example, after using the target prepayment card for the consumption successfully at this time, the user end back platform may push the corresponding usage information to the user end, such as "According to your <the name of the prepayment card> consumption behavior, <the name of the merchant operating agency> has transferred the digital currency of <an amount> to xx merchant".

In one embodiment of the present disclosure, after step S603, the method may further include: sending usage credential information of the target prepayment card to a merchant end; where the usage credential information includes the first transaction amount and the first transaction rights and interests.

Since the merchant end may store and maintain the usage credential information of the target prepayment card including the item of rights and interests by itself, in addition to the items of rights and interests, the usage credential information may include a usage method for rights and interests (such as deducting at a discount of 5%, or using the recharged principal first, or using the gifted amount first, or using the recharged principal and the gifted amount in proportion), and a remaining amount of rights and interests. Herein, the remaining amount of rights and interests may include a remaining amount corresponding to the gifted amount and a remaining amount corresponding to the recharged principal. Therefore, after the target prepayment card is used at this time, the usage credential information such as the first transaction amount and the first transaction rights and interests, etc., are sent to the merchant end, which may facilitate the merchant end to update its stored usage credential information according to the first transaction amount and the first transaction rights and interests, thereby accurately recording the usage credential information of the target prepayment card.

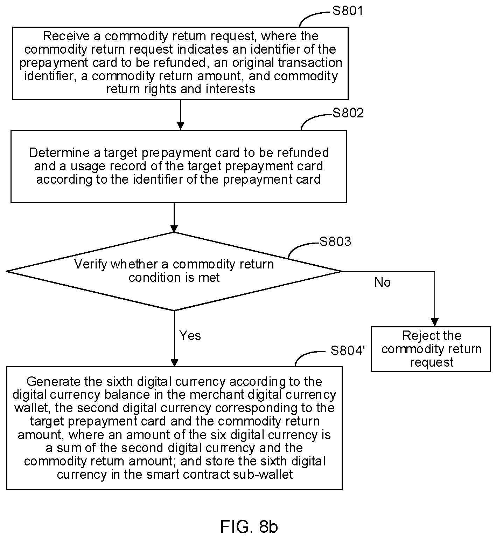

In another embodiment of the present disclosure, the user may further initiate a commodity return request after using the target prepayment card. In this case, the merchant operating agency may make a refund for the transaction that meets a commodity return condition, according to the process shown in FIG. 8a or FIG. 8b:
Step S801: receiving a commodity return request, where the commodity return request indicates an identifier of the prepayment card to be refunded, an original transaction identifier, a commodity return amount, and commodity return rights and interests.
Step S802: determining a target prepayment card to be refunded and a usage record of the target prepayment card according to the identifier of the prepayment card.
Step S803: the prepayment card smart contract verifies whether a commodity return condition is met. If yes, step S804 is performed.
Step S804: in a case where the prepayment card smart contract determines that the commodity return condition is met, generating a sixth digital currency corresponding to the commodity return amount according to a digital currency balance in the merchant digital currency wallet and the commodity return amount, and storing the sixth digital currency in the smart contract sub-wallet.

Herein, a difference between the commodity return processes shown in FIG. 8b and FIG. 8a is mainly in that the amount of the generated sixth digital currency is different. Specifically, in FIG. 8b, steps S801 to S803 are the same as steps S801 to S803 in FIG. 8a, and the difference is in step S804'.

Step S804': in a case where the prepayment card smart contract determines that the commodity return condition is met, generating the sixth digital currency according to the digital currency balance in the merchant digital currency wallet, the second digital currency corresponding to the target prepayment card and the commodity return amount, where an amount of the six digital currency is a sum of the second digital currency and the commodity return amount; and storing the sixth digital currency in the smart contract sub-wallet.

Taking the usage amount of 20 as an example, after the user consumes, the merchant operating agency stores the usage record accordingly. If the user initiates a commodity return request after the consumption, and the commodity return request may specify the original transaction identifier (such as an order number, etc.), the prepayment card identifier, and the commodity return amount requested at this time, the merchant operating agency may determine the corresponding target prepayment card and the corresponding usage record according to the prepayment card identifier, for example, the merchant operating agency determines the usage record to be commodity-returned at this time, from a plurality of usage records corresponding to the target prepayment card, according to the original transaction identifier, and then the prepayment card smart contract verifies whether the commodity return condition is met.

Herein, whether the commodity return condition is met, may be verified according to the deposit configuration information and the amount calculation parameter corresponding to the target prepayment card, and the deposit configuration information and the amount calculation parameter are pre-configured in the prepayment card smart contract. For example, whether the smart contract sub-wallet is commodity-returnable and whether the return fund meets the agreed deposit configuration information and the amount calculation parameter, are verified, that is, whether the return fund meets a predetermined exchange ratio of rights and interests is verified. For example, the prepayment card smart contract may verify whether the commodity return amount is not greater than the original transaction amount. If the original transaction amount is 20 and the commodity return amount is 15, the smart contract may determine that the verification passes, and then the merchant operating agency may generate the sixth digital currency according to the digital currency balance in the merchant digital currency wallet, and return the sixth digital currency to the smart contract sub-wallet. In the return process, the flow direction of the digital currency is the merchant digital currency wallet to the smart contract sub-wallet.

Herein, the amount of the sixth digital currency may correspond to the commodity return amount, or may also correspond to the sum of the commodity return amount and the second digital currency. For example, in a case where the commodity return amount is 15 and the amount of the second digital currency in the smart contract sub-wallet is 10, when generating the sixth digital currency, a new sixth digital currency with an amount of 15 may be generated and stored in the smart contract sub-wallet, or the sixth digital currency with an amount of 25 may be generated according to the existing second digital currency with the amount of 10 in the smart contract sub-wallet and the commodity return amount, and at the same time, the second digital currency with the original amount of 10 in the smart contract sub-wallet may be canceled.

In another embodiment of the present disclosure, in a case where the digital currency balance in the merchant digital currency wallet is less than the commodity return amount, a sixth digital currency is generated according to the digital currency balance in the merchant digital currency wallet, and the commodity return amount is updated according to a difference between the commodity return amount and the sixth digital currency.

When the usage request is received again, and in a case where a second transaction amount indicated by the usage request is greater than updated commodity return amount, a seventh digital currency corresponding to a difference between the second transaction amount and the updated commodity return amount is generated, and is stored in the merchant digital currency wallet corresponding to the target merchant. In a case where the second transaction amount is not greater than the updated commodity return amount, the commodity return amount is updated again according to the difference between the updated commodity return amount and the second transaction amount.

For example, in a case where the commodity return amount is 15 and the balance in the merchant digital currency wallet is only 10, then the sixth digital currency with the amount of 10 may be generated first and returned to the smart contract sub-wallet, and the commodity return amount may be updated to 5 accordingly. When the usage request is received again, a corresponding seventh digital currency is generated according to an amount relationship between the second transaction amount indicated by the usage request and the updated commodity return amount (5).

In one implementation of the present disclosure, in a case where the second transaction amount is greater than the updated commodity return amount, a seventh digital currency corresponding to a difference between the second transaction amount and the updated commodity return amount is generated, and is stored in the merchant digital currency wallet corresponding to the target merchant.

For example, in the case where the above updated commodity return amount is 5, if the second transaction amount is 8, the seventh digital currency with an amount of 3 is further generated and the seventh digital currency is transferred to the merchant digital currency wallet. If the above-mentioned updated commodity return amount is 5 and the second transaction amount is 4, the commodity return amount may be updated according to the difference between the commodity return amount and the second transaction amount. According to the above example in which the commodity return amount is 5 and the second transaction amount is 4, the commodity return amount updated again is 1.

In another embodiment of the present disclosure, after the sixth digital currency is stored into the smart contract sub-wallet, the usage credential information of the target prepayment card may further be sent to the merchant end, where the usage credential information includes the commodity return amount and the commodity return rights and interests. Thus, the merchant end updates the usage credential information stored in the merchant end according to the commodity return amount and the commodity return rights and interests, to accurately record the usage credential information of the target prepayment card.

In one embodiment of the present disclosure, the sixth digital currency returned to the smart contract sub-wallet may still be transferred from the smart contract sub-wallet to the financial management account, so as to increase the income. That is, after generating the sixth digital currency, in the embodiments of the present disclosure, the sixth digital currency may be stored in the financial management account via the smart contract sub-wallet, and the owner of the financial management amount obtained from the financial management account may be determined according to the financial management income end indicated by the prepayment card smart contract.

Herein, the owner of the financial management amount may be determined according to the financial management income end predetermined by the prepayment card smart contract. For example, the merchant may be determined as the owner of the financial management amount, or the user may be determined as the owner of the financial management amount. In a preferred embodiment of the present disclosure, in order to increase the enthusiasm of the merchant to issue prepayment cards and to protect the merchant's rights and interests, the merchant may be determined as the owner of the financial management amount.

According to the above embodiments, when the user initiates the commodity return request after using the target prepayment card, the prepayment card smart contract deployed in the merchant operating agency verifies whether the commodity return condition is met. If the commodity return condition is met, the merchant operating agency transfers the corresponding amount of the digital currency from the merchant digital currency wallet back to the smart contract sub-wallet. If the balance in the merchant digital currency wallet is insufficient, the merchant operating agency may update the commodity return amount according to the second transaction amount corresponding to the subsequent usage request, until the amount to be refunded due to the commodity return is supplemented, thereby ensuring the transaction security of the target prepayment card.

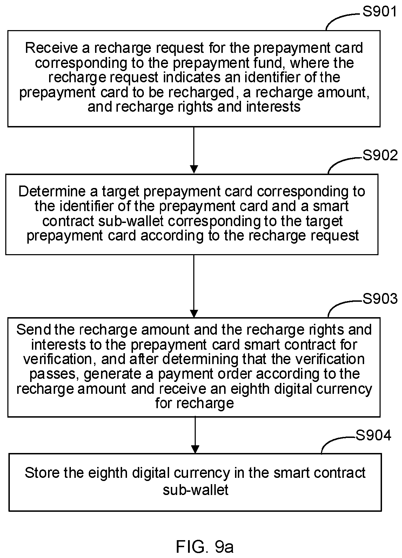

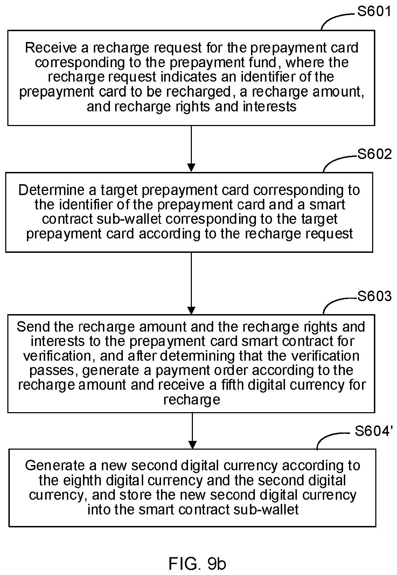

In another embodiment of the present disclosure, the user may also initiate a recharge request for the prepayment card, in a manner of the merchant end or a manner of communicating with the user end back platform via the user end, where the manner of the merchant end is to send the recharge request for the prepayment card directly by the merchant end to the merchant operating agency, and the manner of communicating with the user end back platform via the user end is to send the recharge request for the prepayment card by the user end back platform to the merchant operating agency; that is, the user may initiate the recharge request for the prepayment card by the user end or the merchant end. The recharge method for the prepayment card provided in the embodiments of the present disclosure may be shown in FIG. 9a and FIG. 9b, and the recharge process may include the following steps.

Step S901: receiving a recharge request for the prepayment card corresponding to the prepayment fund, where the recharge request indicates an identifier of the prepayment card to be recharged, a recharge amount, and recharge rights and interests.

Step S902: determining a target prepayment card corresponding to the identifier of the prepayment card and a smart contract sub-wallet corresponding to the target prepayment card according to the recharge request.

Step S903: sending the recharge amount and the recharge rights and interests to the prepayment card smart contract for verification, and after determining that the verification passes, generating a payment order according to the recharge amount and receiving an eighth digital currency for recharge.

Step S904: storing the eighth digital currency in the smart contract sub-wallet.

Herein, a difference between the recharge processes shown in FIG. 9b and FIG. 9a is mainly in whether a new second digital currency is generated according to the eighth digital currency or not. Specifically, in FIG. 9b, steps S901 to S903 are the same as steps S901 to S903 in FIG. 9a, and the difference is in step S904'.

**Step S904': gene**rating a new second digital currency according to the eighth digital currency and the second digital currency, and storing the new second digital currency in the smart contract sub-wallet.

In step S904, after receiving the eighth digital currency for recharge, the merchant operating agency directly stores the eighth digital currency in the smart contract sub-wallet. It could be understood that the eight digital currency is a digital currency corresponding to the recharge amount, if the user pays for the payment order generated according to the recharge amount, and an amount of a ninth digital currency used is greater than the recharge amount, then the ninth digital currency may be split into the eighth digital currency corresponding to the recharge amount, and a remaining digital currency. An amount of the remaining digital currency is a difference between the ninth digital currency and the recharge amount. For example, according to the used ninth digital currency (50) and the recharge amount (such as 40), the eighth digital currency (40) corresponding to the recharge amount and the remaining digital currency (10) may be generated. In addition, in step S604', the new second digital currency (70) may be generated according to the remaining second digital currency (such as 30) in the target prepayment card at the time of recharging and the eighth digital currency (such as 40) corresponding to the recharge amount, and the original second digital currency (30) in the smart contract sub-wallet is canceled at the same time, and the new second digital currency (70) is stored in the smart contract sub-wallet.

In one embodiment of the present disclosure, after the recharge is successful, the merchant operating agency may also notify the merchant end. For example, the merchant operating agency sends the recharge record corresponding to the recharge request to the merchant end corresponding to the target merchant, so that the merchant end updates the usage credential information corresponding to the target prepayment card according to the recharge record.

In another embodiment of the present disclosure, the eighth digital currency or the new second digital currency generated after the recharge may also be transferred from the smart contract sub-wallet to the financial management account, so as to increase the merchant's rights and interests.

In addition, since different prepayment card categories correspond to different prepayment card amount, the digital currency in the smart contract sub-wallet after the recharge may be greater than the prepayment card amount corresponding to the original prepayment card type. Then, after the recharge, the prepayment card type may be changed according to the recharge amount and the recharge rights and interests, and a prepayment card smart contract may be re-bound according to the prepayment card type. In addition, real-name authentication may be performed on the user or the user may be prompted to supplement identity information according to the changed prepayment card type.

For example, the prepayment card type may include: an anonymous prepayment card and a real-name prepayment card; where the real-name prepayment card may be further divided into a weak real-name prepayment card and a strong real-name prepayment card. When purchasing the anonymous prepayment card, the user only needs to provide the communication identifier (such as the user's mobile phone number); when purchasing the weak real-name prepayment card, the user needs to provide information such as the user communication identifier, a user name, and an identification card number, etc.; when purchasing the strong real-name prepayment card, the user needs to provide the user communication identifier, the user name, the identification card number, and biometric information (facial information, fingerprint information, and/or typing habits, etc.). In addition, different prepayment card categories also have different prepayment card quotas correspondingly, where a quota of the strong real-name prepayment card quota > a quota of the weak real-name prepayment card quota > a quota of the anonymous prepayment card. In one implementation of the present disclosure, the user information and the prepayment card quotas corresponding to various prepayment card categories may be shown in the aforementioned Table 1. Assuming that the type of the target prepayment card before the recharge is the weak real-name prepayment card, the corresponding prepayment card quota is 50,000. If the amount in the smart contract sub-wallet exceeds 50,000 after the recharge, the target prepayment card may be changed to the strong real-name prepayment card, and then the prepayment card smart contract may be bound according to the strong real-name prepayment card, and further, the user may be prompted to supplement identity information such as facial information, etc.

In addition, since the target prepayment card may be recharged, the balance in the smart contract sub-wallet may exceed the quota of the target prepayment card itself after the commodity return. In the embodiments of the present disclosure, the exceeding of the prepayment card quota caused by the commodity return amount may be allowed, and there is no need to change the prepayment card type at this time. Alternatively, the prepayment card type may be changed after the commodity return amount results in exceeding the prepayment card quota, and then the corresponding commodity return operation may be completed.

It can be seen from the digital currency-based prepayment fund management method according to the embodiments of the present disclosure that, a prepayment card smart contract is signed in advance by the merchant operating agency and the target merchant, and the smart contract sub-wallet corresponding to the prepayment card is set in the merchant operating agency, and the second digital currency corresponding to the prepayment card is stored in the smart contract sub-wallet or the financial management account. The second digital currency stored in the smart contract sub-wallet does not belong to the target merchant, so the target merchant cannot misappropriate the second digital currency in advance. After the usage request for the prepayment card is received, the fifth digital currency corresponding to the first transaction amount is generated according to the second digital currency, and the fifth digital currency is stored in the merchant digital currency wallet corresponding to the target merchant. It is the fifth digital currency stored in the merchant digital currency wallet that belongs to the merchant, thereby improving the transaction security of the prepayment card, which is conducive to protecting the user's rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet into the financial management account via the same operating agency, which is conducive to improving the merchant's rights and interests.

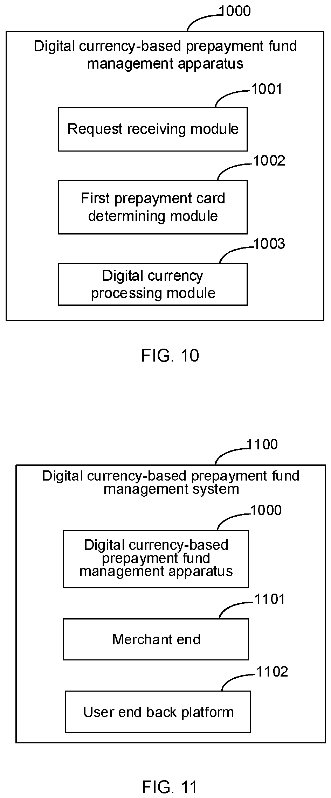

FIG. 10 is a schematic diagram of main modules of a digital currency-based prepayment fund management apparatus according to the embodiments of the present disclosure. As shown in FIG. 10, the digital currency-based prepayment fund management apparatus according to the embodiments of the present disclosure may be applied to a merchant operating agency, and includes: a request receiving module 1001, a first prepayment card determining module 1002 and a digital currency processing module 1003; where
the request receiving module 1001 is configured to receive a usage request for a prepayment card corresponding to a prepayment fund, the usage request indicating an identifier of the prepayment card to be used, a transaction identifier, a first transaction amount, and first transaction rights and interests;
the first prepayment card determining module 1002 is configured to determine a target prepayment card corresponding to the identifier of the prepayment card and a smart contract sub-wallet corresponding to the target prepayment card according to the usage request; where a second digital currency corresponding to the target prepayment card is stored in the smart contract sub-wallet, and the smart contract sub-wallet is set in the merchant operating agency, and is bound to a prepayment card smart contract; and
the digital currency processing module 1003 is configured to send the first transaction amount and the first transaction rights and interests to the prepayment card smart contract for verification, generating a fifth digital currency corresponding to the first transaction amount according to the second digital currency, after determining that the verification passes by the prepayment card smart contract, and storing the fifth digital currency in a merchant digital currency wallet corresponding to a target merchant.

In another embodiment of the present disclosure, the digital currency processing module 1003 is further configured to generate a new second digital currency according to a difference between the second digital currency and the fifth digital currency, and store the new second digital currency in the smart contract sub-wallet.

In another embodiment of the present disclosure, the first transaction amount and the first transaction rights and interests are verified according to an amount calculation parameter and deposit configuration information corresponding to the target prepayment card, and the deposit configuration information and the amount calculation parameter are pre-configured in the prepayment card smart contract.

In another embodiment of the present disclosure, the digital currency processing module 1003 is further configured to store the second digital currency in a financial management account via the smart contract sub-wallet, and determine an owner of a financial management amount obtained from the financial management account according to a financial management income end indicated by the prepayment card smart contract.

In another embodiment of the present disclosure, the digital currency processing module 1003 is further configured to transfer a digital currency corresponding to the first transaction amount from the financial management account to the smart contract sub-wallet; and generate the fifth digital currency according to the digital currency in the smart contract sub-wallet.

In another embodiment of the present disclosure, the management apparatus 1000 also includes: a processing module; where the processing module is configured to correspondingly store the prepayment card identifier and any one or more record information of: a usage record, a recharge record, a commodity return record or a card return record.

In one embodiment of the present disclosure, the processing module is further configured to send the prepayment card identifier and the record information to a user end back platform, so that the user end back platform pushes the record information to a user end corresponding to target user information according to a binding relationship between the target prepayment card and the target user information.

In another embodiment of the present disclosure, the processing module is further configured to send usage credential information of the target prepayment card to the merchant end; where the usage credential information includes the first transaction amount and the first transaction rights and interests.

In another embodiment of the present disclosure, the request receiving module is further configured to receive a commodity return request, the commodity return request indicating an identifier of a prepayment card to be refunded, an original transaction identifier, a commodity return amount, and commodity return rights and interests; the digital currency processing module 1003 is further configured to determine a target prepayment card to be refunded and a usage record of the target prepayment card according to the identifier of the prepayment card; in a case where the prepayment card smart contract determines that a commodity return condition is met, generate a sixth digital currency corresponding to the commodity return amount according to a digital currency balance in the merchant digital currency wallet and the commodity return amount, and store the sixth digital currency in the smart contract sub-wallet; or in a case where the prepayment card smart contract determines that a commodity return condition is met, generate a sixth digital currency according to a digital currency balance in the merchant digital currency wallet, the second digital currency corresponding to the target prepayment card and the commodity return amount, and store the sixth digital currency in the smart contract sub-wallet, where an amount of the sixth digital currency is a sum of the second digital currency and the commodity return amount.

In another embodiment of the present disclosure, the processing module is further configured to send usage credential information of the target prepayment card to a merchant end; where the usage credential information includes the commodity return amount and the commodity return rights and interests.

In another embodiment of the present disclosure, whether the commodity return condition is met, is verified according to the deposit configuration information and amount calculation parameter corresponding to the target prepayment card, and the deposit configuration information and the amount calculation parameter are pre-configured in the prepayment card smart contract.

In another embodiment of the present disclosure, the digital currency processing module 1003 is further configured to store the sixth digital currency into the financial management account via the smart contract sub-wallet, and determine an owner of a financial management amount obtained from the financial management account according to a financial management income end indicated by the prepayment card smart contract.

In another embodiment of the present disclosure, the digital currency processing module 1003 is further configured to, in a case where the digital currency balance in the merchant digital currency wallet is less than the commodity return amount, generate a sixth digital currency according to the digital currency balance in the merchant digital currency wallet, and update the commodity return amount according to a difference between the commodity return amount and the sixth digital currency.

In another embodiment of the present disclosure, the digital currency processing module 1003 is further configured to, when a usage request for a prepayment card is received again, and in a case where a second transaction amount indicated by the usage request is greater than updated commodity return amount, generate a seventh digital currency corresponding to a difference between the second transaction amount and the updated commodity return amount, and store the seventh digital currency in the merchant digital currency wallet corresponding to the target merchant; and in a case where the second transaction amount is not greater than the updated commodity return amount, update the commodity return amount again according to the difference between the updated commodity return amount and the second transaction amount.

In another embodiment of the present disclosure, the request receiving module 1001 is further configured to receive a recharge request for the prepayment card corresponding to the prepayment fund, where the recharge request indicates an identifier of the prepayment card to be recharged, a recharge amount, and recharge rights and interests; and the digital currency processing module 1003 is further configured to determine a target prepayment card corresponding to the identifier of the prepayment card and a smart contract sub-wallet corresponding to the target prepayment card according to the recharge request; send the recharge amount and the recharge rights and interests to the prepayment card smart contract for verification, and after determining that the verification passes, generate a payment order according to the recharge amount and receive an eighth digital currency for recharge; store the eighth digital currency in the smart contract sub-wallet; or generate a new second digital currency according to the eighth digital currency and the second digital currency, and store the new second digital currency in the smart contract sub-wallet.

In another embodiment of the present disclosure, the processing module is further configured to send the recharge record corresponding to the recharge request to the merchant end corresponding to the target merchant, so that the merchant end updates the usage credential information corresponding to the target prepayment card according to the recharge record.

In another embodiment of the present disclosure, the processing module is further configured to change a prepayment card type according to the recharge amount and the recharge rights and interests, and re-bind a prepayment card smart contract according to the prepayment card type.

It can be seen from the digital currency-based prepayment fund management apparatus according to the embodiments of the present disclosure that, a prepayment card smart contract is signed in advance by the merchant operating agency and the target merchant, and the smart contract sub-wallet corresponding to the prepayment card is set in the merchant operating agency, and the second digital currency corresponding to the prepayment card is stored in the smart contract sub-wallet or the financial management account. The second digital currency stored in the smart contract sub-wallet does not belong to the target merchant, so the target merchant cannot misappropriate the second digital currency in advance. After the usage request for the prepayment card is received, the fifth digital currency corresponding to the first transaction amount is generated according to the second digital currency, and the fifth digital currency is stored in the merchant digital currency wallet corresponding to the target merchant. It is the fifth digital currency stored in the merchant digital currency wallet that belongs to the merchant, thereby improving the transaction security of the prepayment card, which is conducive to protecting the user's rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet into the financial management account via the same operating agency, which is conducive to improving the merchant's rights and interests.

FIG. 11 is a schematic diagram of main modules of a digital currency-based prepayment fund management system according to the embodiments of the present disclosure.

As shown in FIG. 11, the digital currency-based prepayment fund management system in the embodiments of the present disclosure may include: the digital currency-based prepayment fund management apparatus 1000 provided in any of the above embodiments and a merchant end 1101; where
the merchant end 1101 is configured to send a usage request to the management apparatus, where the usage request indicates an identifier of a prepayment card to be used, a transaction identifier, a first transaction amount, and first transaction rights and interests;
the management apparatus 1000 is configured to generate a fifth digital currency corresponding to the first transaction amount, and store the fifth digital currency in a merchant digital currency wallet corresponding to the target merchant.

In one embodiment of the present disclosure, the merchant end 1101 is further configured to record management information of the target prepayment card, and the management information indicates any one or more of: a payment password of the target prepayment card, a setting end of the payment password, a management end of the target prepayment card, a responsible end of an invalid transaction corresponding to the target prepayment card and usage credential information of the target prepayment card; where the usage credential information includes: an item of rights and interests, a usage method of rights and interests and/or a remaining amount of rights and interests.

For example, the item of rights and interests may be: recharging 1000 and obtaining 1000, deduction at a discount of 10% when the prepayment card is consumed, or recharging 900 and obtaining 1000, deduction at a discount of 5% when the prepayment card is consumed, etc. The usage method of rights and interests may be first using the recharged principal, or first using the gifted amount, or using both the recharged principal and the gifted amount in proportion. Taking the above of recharging 900 and obtaining 1000 as an example, 900 is the recharged principal and 100 is the gifted amount; the remaining amount of rights and interests may include the remaining amount corresponding to the gifted amount and the remaining amount corresponding to the recharged principal.

In one embodiment of the present disclosure, the system may further include: a user end back platform 1102; where the management apparatus 1000 is configured to correspondingly store the identifier of the prepayment card and any one or more of: a usage record, a recharge record, a commodity return record, or a card return record, and send the identifier of the prepayment card and record information to the user end back platform 1102;
the user end back platform 1102 is configured to push the record information to a user end corresponding to target user information according to a binding relationship between a target prepayment card and the target user information.

It can be seen from the digital currency-based prepayment fund management system according to the embodiments of the present disclosure that, a prepayment card smart contract is signed in advance by the merchant operating agency and the target merchant, and the smart contract sub-wallet corresponding to the prepayment card is set in the merchant operating agency, and the second digital currency corresponding to the prepayment card is stored in the smart contract sub-wallet or the financial management account. The second digital currency stored in the smart contract sub-wallet does not belong to the target merchant, so the target merchant cannot misappropriate the second digital currency in advance. After the usage request for the prepayment card is received, the fifth digital currency corresponding to the first transaction amount is generated according to the second digital currency, and the fifth digital currency is stored in the merchant digital currency wallet corresponding to the target merchant. It is the fifth digital currency stored in the merchant digital currency wallet that belongs to the merchant, thereby improving the transaction security of the prepayment card, which is conducive to **protecting the user**'s rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet into the financial management account via the same operating agency, which is conducive to improving the merchant's rights and interests.

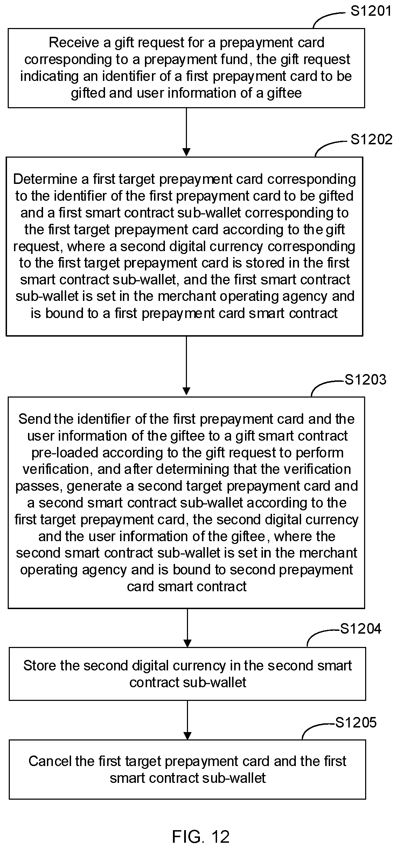

FIG. 12 is a schematic diagram of main steps of a digital currency-based prepayment fund management method according to the embodiments of the present disclosure. As shown in FIG. 12, the digital currency-based prepayment fund management method in the embodiments of the present disclosure, when applied to a merchant operating agency, mainly includes the following steps:
Step S1201: receiving a gift request for a prepayment card corresponding to a prepayment fund, the gift request indicating an identifier of a first prepayment card to be gifted and user information of a giftee.
Step S1202: determining a first target prepayment card corresponding to the identifier of the first prepayment card to be gifted and a first smart contract sub-wallet corresponding to the first target prepayment card according to the gift request, where a second digital currency corresponding to the first target prepayment card is stored in the first smart contract sub-wallet, and the first smart contract sub-wallet is set in the merchant operating agency and is bound to a first prepayment card smart contract.
Step S1203: sending the identifier of the first prepayment card and the user information of the giftee to a gift smart contract pre-loaded according to the gift request to perform verification, and after determining that the verification passes, generating a second target prepayment card and a second smart contract sub-wallet according to the first target prepayment card, the second digital currency and the user information of the giftee, where the second smart contract sub-wallet is set in the merchant operating agency and is bound to second prepayment card smart contract.
Step S1204: storing the second digital currency in the second smart contract sub-wallet.
Step S1205: canceling the first target prepayment card and the first smart contract sub-wallet.

Before the prepayment card is gifted, the merchant operating agency may generate a first target prepayment card according to the generation request for the prepayment card and store a second digital currency in the first smart contract sub-wallet. In one embodiment of the present disclosure, the generation process of the first target prepayment card may refer to step S401 to step S406 shown in FIG. 4.

After the first target prepayment card is generated, a first user (gifter) who owns the first target prepayment card may gift the first target prepayment card to a second user (giftee). At this time, the gifter may initiate a gift request by the merchant end. After receiving the gift request, the merchant operating agency may load a gift smart contract and verify a current state of the first target prepayment card and/or whether user information of the giftee is complete, by the gift smart contract. For example, whether the first target prepayment card has been already in a gifted state, whether there is a fund to be commodity-returned, and whether there is any freeze may be verified by the gift smart contract. If the first target prepayment card is currently in a normal usage state (i.e., not in a gifted state or a frozen state) and there is no fund to be commodity-returned, it may be determined that the verification passes. In this case, it may be determined that the first target prepayment card may be gifted. In addition, if the first target prepayment card is a real-name prepayment card, user information of the giftee may also be verified, for example, the real-name comparison for the giftee may be performed. Herein, the user information of the giftee may be obtained according to real-name wallet information of the giftee, or the giftee may be prompted to supplement the user information of the giftee, on a page of a gift prompt sent to the giftee; or the gifter may also be prompted to input the user information of the giftee after the gift request is received.

In one embodiment of the present disclosure, in a case where it is verified that the first target prepayment card can be gifted, the merchant operating agency may send a gift prompt to the giftee, and receive feedback information input by the giftee according to the gift prompt; then the gift smart contract may verify a gift time validity of the first target prepayment card, whether a gift cancellation indication of the first target prepayment card is received before the feedback information, and whether the feedback information includes a gift reception indication, according to the feedback information.

Specifically, in a case where it is determined that the first target prepayment card can be gifted, the merchant operating agency changes the state of the first target prepayment card to be in gift, and sends the gift prompt to the merchant applet on the merchant end or the user end, to prompt the giftee whether to accept the gift. Accordingly, the giftee may input the feedback information via the merchant applet on the merchant end or the user end according to the gift prompt. In this process, the gift smart contract deployed in the merchant operating agency monitors an instruction of the merchant end or the merchant applet to monitor the feedback information. Then, whether the giftee accepts or refuses to receive the target prepayment card to be gifted, is verified according to the feedback information; if the gifter accepts to receive the target prepayment card to be gifted, whether the gift reception indication is input within the gift time validity of the first target prepayment card, and whether the gifter cancels the gift operation within the gift time validity, etc., are verified according to the feedback information. If the gift time validity of the first target prepayment card expires, or the gifter withdraws the gift operation or the giftee refuses to receive the target prepayment card to be gifted, the gift smart contract cancels this gift and the first target prepayment card remains in the gifter's name. Herein, a monitoring period of the gift smart contract starts from loading of the gift smart contract, until canceling this gift or a second prepayment card smart contract corresponding to the giftee is loaded successfully.

In another embodiment of the present disclosure, the gift smart contract further needs to confirm a reception of a prepayment agreement signed by the giftee, to update the prepayment agreement signed between the gifter, the merchant operating agency and the target merchant to the prepayment agreement between the giftee, the merchant operating agency and the target merchant, so that the giftee may enjoy the same rights and interests as the gifter based on the prepayment agreement, thereby improving the transaction security of the prepayment card.

In one embodiment of the present disclosure, the user information of the giftee includes a user communication identifier corresponding to the second target prepayment card. The user communication identifier may be input by the gifter when initiating the gift request, or may be input by the giftee after determining the reception of the gift (such as, input when supplementing real-name information of the giftee). After generating the second target prepayment card, the merchant operating agency may further bind the user communication identifier of the giftee to a prepayment card identifier of the second target prepayment card, and send a binding result to the user end back platform, so that the user end back platform establishes a binding relationship between the second target prepayment card and the user information of the giftee according to the user communication identifier and pre-stored user information.

After gifting the prepayment card, the merchant operating agency may bind the user communication identifier (such as the mobile phone number of the giftee, etc.) to the second target prepayment card, and send the binding result to the user end back platform. For example, the merchant operating agency may generate index information corresponding to the second target prepayment card, as the binding result. The index information may include: a real-name wallet associated with the giftee, a prepayment card type (an anonymous prepayment card or a real-name prepayment card), the user communication identifier, a merchant prepayment fund type (a unique number assigned by the merchant operating agency for the prepayment card issued by the merchant), the prepayment card identifier of the second target prepayment card, a merchant identifier, a card purchase amount, an identifier of the merchant operating agency, a prepayment card state (such as having been gifted), a gift time of the target prepayment card, and a validity period of the target prepayment card. In addition, the index information may further include a field of whether to be gifted, which is used as a prompt of whether the card is gifted. The index information may further include fields of a first smart contract sub-wallet ID of the gifter, a mobile phone number of the gifter and the gifted time, etc., so as to display the target prepayment card's information about the gift. Herein, the user communication identifier may be the mobile phone number of the user to whom the prepayment card belongs, and the mobile phone number is used for identity binding to the prepayment card. The prepayment card identifier refers to a unique number assigned by the merchant operating agency for the prepayment card issued by the merchant, which is unique within the merchant operating agency. In addition, the index result may further include a card number of a merchant prepayment card, which refers to a card number of a prepayment card assigned by the merchant to the target prepayment card. The user end back platform may associate the prepayment card type according to the prepayment card identifier. The identifier of the merchant operating agency is a unique number assigned by the merchant operating agency to the merchant and is unique within the merchant operating agency. The identifier of the merchant operating agency may be an operating agency code. The management module at the user end back platform may manage the index information. Specifically, the management module of the user end back platform binds the user communication identifier of the giftee to the user information of the giftee.

In order to avoid gifting errors caused by the theft of the giftee's mobile phone number, or by the release of the number again after the cancellation, to ensure the accurate association between the second target prepayment card and the giftee, in one embodiment of the present disclosure, after the gifting is initiated, the merchant end and/or the user end back platform may generate a gift passphrase and send the gift passphrase to the gifter; the gifter informs the giftee of the gift passphrase, and then the giftee may input the gift passphrase into the merchant end and/or the user end, so that the merchant end and/or the user end back platform activates the second target prepayment card according to the gift passphrase, when receiving the gift passphrase input by the giftee.

According to the above embodiments, after the target prepayment card is generated, the second target prepayment card may be bound to the user communication identifier (such as the mobile phone number) of the giftee by the merchant operating agency and/or the user end back platform. Herein, the user end corresponding to the user end back platform may be in the form of an APP or applet, and the merchant end may also be in the form of an APP or applet. If the binding is performed directly by the merchant operating agency, the merchant operating agency may send the binding result to the user end back platform, so that the user end back platform binds the second target prepayment card to the user information of the giftee according to the binding result. Therefore, later in the life cycle of the second target prepayment card, the user end back platform may push the usage record, recharge record, return record and card return record of the second target prepayment card to the user end corresponding to the giftee, according to the binding relationship.

In one embodiment of the present disclosure, the merchant operating agency may further transfer the second digital currency in the second smart contract sub-wallet to the financial management account according to the second prepayment card smart contract, and determine an owner of a financial management account obtained from the financial management account according to a financial management income end indicated by the second prepayment card smart contract.

Herein, the financial management account may be set in the merchant operating agency. If the financial management account is within the merchant operating agency, the merchant operating agency may directly transfer the second digital currency to the financial management account according to the second prepayment card smart contract. If the financial management account is an account on another financial management platform, the merchant operating agency may transfer the second digital currency in the second smart contract sub-wallet to a financial management platform corresponding to the financial management account, and transfer the second digital currency from the financial management platform to the financial management account.

The giftee signs a prepayment agreement when accepting the gift. The merchant operating agency may agree on that the fund corresponding to the prepayment card is given to the merchant operating agency for deposit, according to the prepayment agreement, and trigger rights and responsibilities of each party in the processes of the generation, usage and card return of the prepayment card, according to the prepayment card smart contract; and may also agree on that the digital currency in the smart contract sub-wallet may be used for the financial management within a limited scope, and agree on an owner of the financial management income and losses, for example, agree on that the financial management income belongs to the merchant and the losses are borne by the merchant. Therefore, after storing the second digital currency into the second smart contract sub-wallet, the second digital currency in the second smart contract sub-wallet may be transferred to the financial management account, which is conducive to increasing the income of the escrowed fund **and thus protecting the merchant**'s rights and interests. Herein, the owner of the financial management amount may be determined according to a financial management income end predetermined by the second prepayment card smart contract. For example, the merchant may be determined as the owner of the financial management amount, or the user may be determined as the owner of the financial management amount. In a preferred embodiment of the present disclosure, in order to increase the enthusiasm of the merchant to issue prepayment cards and to **protect the merchant**'s rights and interests, the merchant may be determined as the owner of the financial management amount.

In addition, in one embodiment of the present disclosure, in a case where the merchant is unable to continue to provide services, or the giftee returns the card after negotiation with the merchant, and so on, the merchant operating agency may receive a card return request for the prepayment card corresponding to the prepayment fund, the card return request indicating an identifier of a second target prepayment card to be returned; determine the second target prepayment card, a balance in the second target prepayment card and user information of a giftee bound to the second target prepayment card according to the identifier of the second target prepayment card, the user information indicating a digital currency wallet of the giftee; generate a tenth digital currency according to the balance in the second target prepayment card, and store the tenth digital currency into the digital currency wallet of the giftee.

In this embodiment, the card return request may be initiated by the giftee or by the merchant who issued the prepayment card. The merchant operating agency determines the second target prepayment card to be returned, the balance in the second target prepayment card, the user information of the giftee, etc., according to the card return request for the prepayment card. The merchant operating agency may forward the card return request to the merchant for confirmation, and after obtaining information about the merchant's consent to return the card, may generate the tenth digital currency in an available state according to the balance in the second target prepayment card, and store the tenth digital currency into the digital currency wallet of the giftee, so that the giftee may conduct other transactions according to the tenth digital currency.

In a case where the second digital currency corresponding to the prepayment card is stored in a financial management account, when returning the card, the digital currency corresponding to the balance in the second target prepayment card may be transferred back to the second smart contract sub-wallet from the financial management account, and then the tenth digital currency in the available state is generated according to the digital currency in the second smart contract sub-wallet, and the tenth digital currency is transferred back to the digital currency wallet of the giftee. That is, in the process of the card return, the flow direction of the digital currency is from the financial management account to the second smart contract sub-wallet, and to the digital currency wallet of the giftee. Accordingly, the balance in the returned prepayment card is returned to the digital currency wallet of the giftee.

In addition, after the target prepayment card is gifted successfully, the merchant operating agency may agree with the merchant whether to set a payment password for the prepayment card, and which party of the merchant or the merchant operating agency provides a password setting (setting end) and safekeeping services (management end), and agree on share responsibilities for the denial transaction for the user (responsibility end). In addition, the merchant end may further maintain the usage credential information of the second target prepayment card by itself, such as the item of rights and interests, the usage method of rights and interests and/or the remaining amount of rights and interests. For example, the item of rights and interests may be: recharging 1000 and obtaining 1000, deduction at a discount of 10% when the prepayment card is consumed, or recharging 900 and obtaining 1000, deduction at a discount of 5% when the prepayment card is consumed, etc. The usage method of rights and interests may be first using the recharged principal, or first using the gifted amount, or using both the recharged principal and the gifted amount in proportion. Taking the above of recharging 900 and obtaining 1000 as an example, 900 is the recharged principal and 100 is the gifted amount; the remaining amount of rights and interests may include the remaining amount corresponding to the gifted amount and the remaining amount corresponding to the recharged principal.

It can be seen from the digital currency-based prepayment fund management method according to the embodiments of the present disclosure that: a prepayment card smart contract is signed in advance by the merchant operating agency and the target merchant, and the first smart contract sub-wallet corresponding to the first target prepayment card is set in the merchant operating agency, and the second digital currency corresponding to the first target prepayment card is stored into the first smart contract sub-wallet. After receiving the gift request for the prepayment card, the identifier of the first prepayment card and the user information of the giftee are verified by the gift smart contract, and after the verification passes, the second target prepayment card and the second smart contract sub-wallet are generated, which both belong to the giftee, and the second digital currency is stored in the second smart contract sub-wallet, thereby implementing the gifting of the first target prepayment card. The second target prepayment card generated after the gifting is bound to the user information of the giftee, and the giftee may enjoy the same rights and interests as the gifter, thereby improving the transaction security of the prepayment card and improving the user experience.

In addition, the merchant operating agency is set with the smart contract sub-wallet corresponding to the gifter or the giftee, and stores the second digital currency corresponding to the target prepayment card in the smart contract sub-wallet. The second digital currency stored in the smart contract sub-wallet does not belong to the target merchant, so that the target merchant cannot misappropriate the second digital currency in advance, thereby improving the transaction security of the prepayment card, which is conducive to protecting the **user**'s rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet into the financial management account via the same operating agency, which is conducive to improving the merchant's rights and interests.

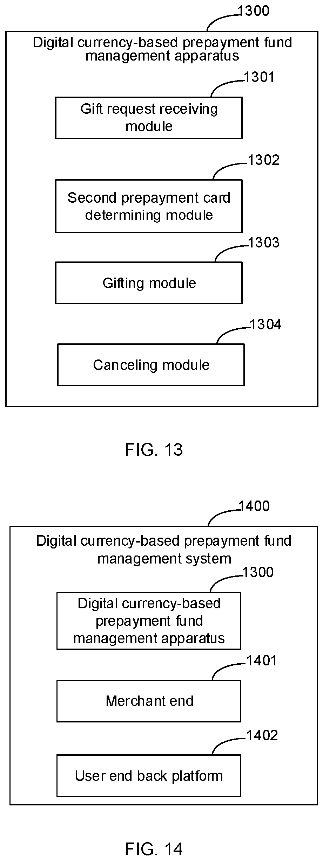

FIG. 13 is a schematic diagram of main modules of a digital currency-based prepayment fund management apparatus according to the embodiments of the present disclosure. As shown in FIG. 13, the digital currency-based prepayment fund management apparatus 1300 in the embodiments of the present disclosure may be applied to a merchant operating agency, and include: a gift request receiving module 1301, a second prepayment card determining module 1302, a gifting module 1303 and a canceling module 1304; where
the gift request receiving module 1301 is configured to receive a gift request for a prepayment card corresponding to a prepayment fund, the gift request indicating an identifier of a first prepayment card to be gifted and user information of a giftee;
the second prepayment card determining module 1302 is configured to determine a first target prepayment card corresponding to the identifier of the first prepayment card to be gifted and a first smart contract sub-wallet corresponding to the first target prepayment card according to the gift request, where a second digital currency corresponding to the first target prepayment card is stored in the first smart contract sub-wallet, and the first smart contract sub-wallet is set in the merchant operating agency and is bound to a first prepayment card smart contract;
the gifting module 1303 is configured to send the identifier of the first prepayment card and the user information of the giftee to a gift smart contract pre-loaded according to the gift request to perform verification, and after determining that the verification passes, generate a second target prepayment card and a second smart contract sub-wallet according to the first target prepayment card, the second digital currency and the user information of the giftee, where the second smart contract sub-wallet is set in the merchant operating agency and is bound to second prepayment card smart contract; and store the second digital currency in the second smart contract sub-wallet; and
the canceling module, configured to cancel the first target prepayment card and the first smart contract sub-wallet.

In one embodiment of the present disclosure, the gifting module 1303 is configured to verify a current state of the first target prepayment card and/or whether user information of the giftee is complete.

In another embodiment of the present disclosure, the gifting module 1303 is configured to send a gift prompt to the giftee, and receive feedback information input by the giftee according to the gift prompt; verify a gift time validity of the first target prepayment card, whether a gift cancellation indication of the first target prepayment card is received before the feedback information, and whether the feedback information includes a gift reception indication, according to the feedback information.

In another embodiment of the present disclosure, the gifting module 1303 is further configured to confirm reception of a prepayment agreement signed by the giftee.

In another embodiment of the present disclosure, the management apparatus may further include a processing module, where the user information of the giftee includes a user communication identifier corresponding to the second target prepayment card, and the processing module is configured to bind the user communication identifier to a prepayment card identifier of the second target prepayment card, and send a binding result to the user end back platform, so that the user end back platform establishes a binding relationship between the second target prepayment card and the user information of the giftee according to the user communication identifier and pre-stored user information.

In another embodiment of the present disclosure, the processing module is further configured to transfer the second digital currency in the second smart contract sub-wallet to the financial management account according to the second prepayment card smart contract, and determine an owner of a financial management account obtained from the financial management account according to a financial management income end indicated by the second prepayment card smart contract.

In another embodiment of the present disclosure, the processing module is configured to transfer the second digital currency in the smart contract sub-wallet to a financial management platform corresponding to the financial management account, and transfer the second digital currency from the financial management platform to the financial management account.

In another embodiment of the present disclosure, the processing module is further configured to receive a card return request for the prepayment card, the card return request indicating an identifier of a second target prepayment card to be returned; determine the second target prepayment card, a balance in the second target prepayment card and user information of a giftee bound to the second target prepayment card according to the identifier of the second target prepayment card, the user information indicating a digital currency wallet of the giftee; generate a tenth digital currency according to the balance in the second target prepayment card, and store the tenth digital currency into the digital currency wallet of the giftee.

In another embodiment of the present disclosure, the processing module is configured to: transfer the digital currency corresponding to the balance of the second target prepayment card out from the financial management account to the second smart contract sub-wallet, and generate the tenth digital currency according to the digital currency in the second smart contract sub-wallet.

It can be seen from the digital currency-based prepayment fund management apparatus according to the embodiments of the present disclosure that: a prepayment card smart contract is signed in advance by the merchant operating agency and the target merchant, and the first smart contract sub-wallet corresponding to the first target prepayment card is set in the merchant operating agency, and the second digital currency corresponding to the first target prepayment card is stored into the first smart contract sub-wallet. After receiving the gift request for the prepayment card, the identifier of the first prepayment card and the user information of the giftee are verified by the gift smart contract, and after the verification passes, the second target prepayment card and the second smart contract sub-wallet are generated, which both belong to the giftee, and the second digital currency is stored in the second smart contract sub-wallet, thereby implementing the gifting of the first target prepayment card. The second target prepayment card generated after the gifting is bound to the user information of the giftee, and the giftee may enjoy the same rights and interests as the gifter, thereby improving the transaction security of the prepayment card and improving the user experience.

In addition, the merchant operating agency is set with the smart contract sub-wallet corresponding to the gifter or the giftee, and stores the second digital currency corresponding to the target prepayment card in the smart contract sub-wallet. The second digital currency stored in the smart contract sub-wallet does not belong to the target merchant, so that the target merchant cannot misappropriate the second digital currency in advance, thereby improving the transaction security of the prepayment card, which is **conducive to protecting the user**'s rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet into the financial management account via the same operating agency, which is conducive to improving the merchant's rights and interests.

FIG. 14 is a schematic diagram of main modules of a digital currency-based prepayment fund management system according to the embodiments of the present disclosure.

As shown in FIG. 14, the digital currency-based prepayment fund management system 1300 in the embodiments of the present disclosure may include: the management apparatus 1300 provided in any one of the above embodiments, a merchant end 1401 and a user end back platform 1402; where
the merchant end 1401 or the user end back platform 1402 is configured to send a gift request for a prepayment card corresponding to a prepayment fund to the management apparatus 300, where the gift request indicates an identifier of a first prepayment card to be gifted and user information of a giftee.

The gifter may initiate the gift request via the user end or the merchant end. When the gifter initiates the gift request according to the user end, the gift request may be sent to the management apparatus by the user end back platform.

In another embodiment of the present disclosure, the merchant end and/or the user end back platform is further configured to generate a gift passphrase and send the gift passphrase to a gifter; and when receiving the gift passphrase input by the giftee, activate the second target prepayment card according to the gift passphrase.

In one embodiment of the present disclosure, the merchant end is configured to record management information of the second target prepayment card, and the management information indicates any one or more of: a payment password of the second target prepayment card, a setting end of the payment password, a management end of the second target prepayment card, a responsible end of an invalid transaction corresponding to the second target prepayment card and usage credential information of the second target prepayment card; where the usage credential information includes: an item of rights and interests, a usage method of rights and interests and/or a remaining amount of rights and interests.

Herein, the item of rights and interests may be: recharging 1000 and obtaining 1000, deduction at a discount of 10% when the prepayment card is consumed, or recharging 900 and obtaining 1000, deduction at a discount of 5% when the prepayment card is consumed, etc. The usage method of rights and interests may be first using the recharged principal, or first using the gifted amount, or using both the recharged principal and the gifted amount in proportion. Taking the above of recharging 900 and obtaining 1000 as an example, 900 is the recharged principal and 100 is the gifted amount; the remaining amount of rights and interests may include the remaining amount corresponding to the gifted amount and the remaining amount corresponding to the recharged principal.

In one embodiment of the present disclosure, the management apparatus 1300 is configured to bind the user communication identifier of the giftee to a prepayment card identifier of the second target prepayment card, and send a binding result to the user end back platform 1402.

The user end back platform 1402 is configured to establish a binding relationship between the second target prepayment card and the user information of the giftee according to the user communication identifier and pre-stored user information.

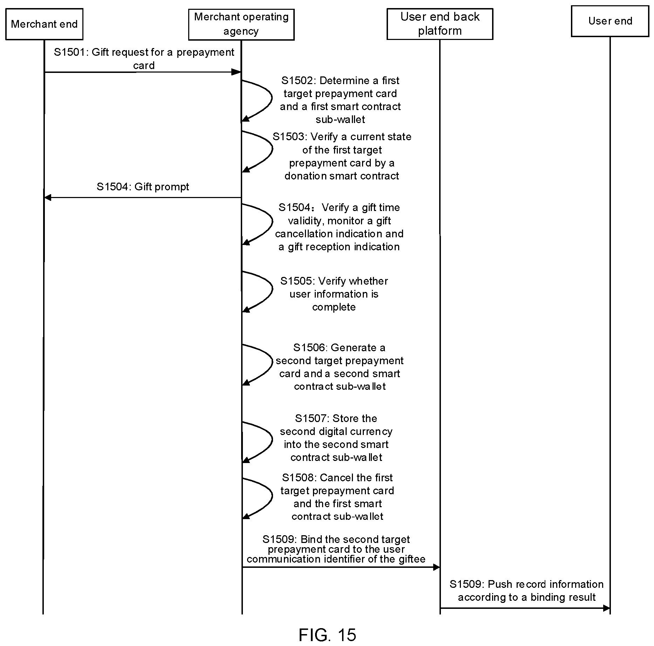

The digital currency-based prepayment fund management method provided in the embodiments of the present disclosure is explained in detail below by taking the above-mentioned digital currency-based prepayment fund management system as an example. The gifter, after purchasing the first target prepayment card according to the method shown in FIG. 4, may gift the purchased first target prepayment card to the giftee. The gifting process may include the following steps as shown in FIG. 15.

Step S1501: the gifter sends a gift request for a prepayment card corresponding to a prepayment fund to the prepayment fund management apparatus (the merchant operating agency) via a merchant applet of the merchant end or the user end.

In this step, the gifter may trigger the gifting operation for the prepayment card via an APP (the merchant end) of a certain e-commerce platform, and accordingly, the merchant end sends the gift request for the prepayment card to the corresponding merchant operating agency corresponding to the merchant end. The gift request indicates an identifier of the first prepayment card to be gifted and user information of the giftee.

Step S1502: the merchant operating agency determines a first target prepayment card corresponding to the identifier of the first prepayment card to be gifted and a first smart contract sub-wallet corresponding to the first target prepayment card according to the gift request.

Step S1503: the merchant operating agency pre-loads the gift smart contract according to the gift request, and verifies a current state of the first target prepayment card by the gift smart contract, to verify whether the first target prepayment card can be gifted. In a case where the first target prepayment card cannot be gifted, the gifting process is terminated, and in a case where the first target prepayment card can be gifted, step S1504 is executed.

Step S1504: the merchant operating agency sends a gift prompt to the giftee via the merchant applet on the merchant end or the user end. The gift smart contract monitors operations of the giftee or the gifter, and verifies a gift time validity of the first target prepayment card, whether a gift cancellation indication of the first target prepayment card is received before the feedback information, and whether the feedback information includes a gift reception indication, and in a case where the verification passes, step S1505 is executed, otherwise, the gifting process is terminated.

Step S1505: the gift smart contract verifies whether the user information is complete, and step S1506 is executed in a case where the verification passes.

Here, in a case where the first target prepayment card is a real-name prepayment card, the gift smart contract may perform real-name authentication on the user information of the giftee. Specifically, the gift smart contract may obtain the user information of the giftee according to user wallet information of the giftee, or may guide the giftee or the gifter to input the user information of the giftee via the merchant applet on the merchant end or the user end. The user information of the giftee is then verified, such as the real-name verification is performed, and whether the user information is complete is verified (for example, when the prepayment card type is a strong real-name prepayment card, the corresponding user information needs to include a mobile phone number, name, ID number, and facial information of the user, etc.). If the user information is incomplete, the giftee or the gifter may be prompted to supplement the user information; if the real-name verification does not pass, it may also be prompted that the real-name verification is not successful.

Step S1506: generating a second target prepayment card and a second smart contract sub-wallet according to the first target prepayment card, the second digital currency and the user information of the giftee.

Herein, the second smart contract sub-wallet is set in the merchant operating agency and is bound to the second prepayment card smart contract.

Step S1507: storing the second digital currency in the second smart contract sub-wallet.

Step S1508: canceling the first target prepayment card and the first smart contract sub-wallet.

Step S1509: binding the user communication identifier of the giftee to the prepayment card identifier of the second target prepayment card, and sending a binding result to the user end back platform, so that the user end back platform establishes a binding relationship between the second target prepayment card and the user information of the giftee according to the user communication identifier of the giftee and pre-stored user information, and pushing record information of the second target prepayment card to the user end of the giftee according to the binding relationship.

It can be seen from the digital currency-based prepayment fund management system according to the embodiments of the present disclosure that: a prepayment card smart contract is signed in advance by the merchant operating agency and the target merchant, and the first smart contract sub-wallet corresponding to the first target prepayment card is set in the merchant operating agency, and the second digital currency corresponding to the first target prepayment card is stored into the first smart contract sub-wallet. After receiving the gift request for the prepayment card, the identifier of the first prepayment card and the user information of the giftee are verified by the gift smart contract, and after the verification passes, the second target prepayment card and the second smart contract sub-wallet are generated, which both belong to the giftee, and the second digital currency is stored in the second smart contract sub-wallet, thereby implementing the gifting of the first target prepayment card. The second target prepayment card generated after the gifting is bound to the user information of the giftee, and the giftee may enjoy the same rights and interests as the gifter, thereby improving the transaction security of the prepayment card and improving the user experience.

In addition, the merchant operating agency is set with the smart contract sub-wallet corresponding to the gifter or the giftee, and stores the second digital currency corresponding to the target prepayment card in the smart contract sub-wallet. The second digital currency stored in the smart contract sub-wallet does not belong to the target merchant, so that the target merchant cannot misappropriate the second digital currency in advance, thereby improving the transaction security of the prepayment card, which is **conducive to protecting the user**'s rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet into the financial management account via the same operating agency, which is conducive to improving the merchant's rights and interests.

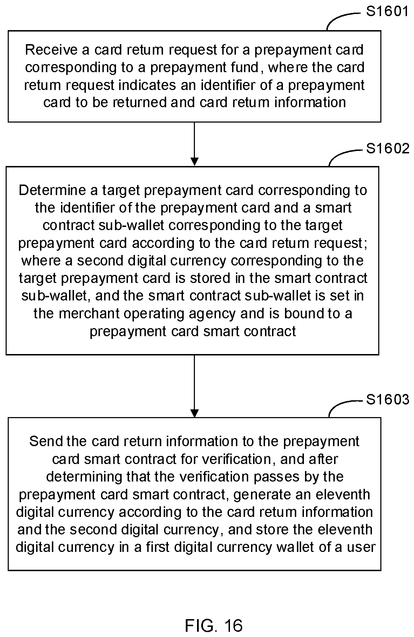

In addition, the embodiments of the present invention further provide a card return method for a digital currency-based prepayment card. When the user consumes, the user may initiate a usage request by a merchant end (such as a merchant applet). The merchant operating agency may execute a consumption process based on the prepayment card smart contract to transfer a digital currency corresponding to the transaction amount from the financial management account to the merchant digital currency wallet through the smart contract sub-wallet. When the user needs to recharge the prepayment card, the user may initiate a recharge request by the user end or the merchant end. The successfully recharged amount is automatically transferred to the smart contract sub-wallet, and may be further transferred from the smart contract sub-wallet to the financial management account. The commodity return means that a user requests a refund for a certain transaction. If the refund occurs after a negotiation between the user and the merchant, the merchant operating agency may return the corresponding digital currency from the merchant digital currency wallet to the smart contract sub-wallet, and the corresponding digital currency may further be transferred from the smart contract sub-wallet to the financial management account. In addition, when the user needs to return the card, a withdrawable quota may be withdrawn. For example, if the user unilaterally initiates the card return, the merchant operating agency may transfer the digital currency from the financial management account to the smart contract sub-wallet and return the digital currency to the user digital currency wallet. Or, if the user returns the card after negotiating with the merchant, the merchant may initiate the card return request. In addition, if the prepayment card needs to be canceled due to a case of card expiration, or closure of the merchant due to poor business practices, etc., the digital currency may also be transferred from the financial management account back to the smart contract sub-wallet and then returned back to the user digital currency wallet. FIG. 16 is a schematic diagram of main steps of a digital currency-based prepayment fund management method according to the embodiments of the present disclosure. As shown in FIG. 16, the digital currency-based prepayment fund management method in the embodiments of the present disclosure may be applied to a merchant operating agency, and mainly include the following steps.

Step S1601: receiving a card return request for a prepayment card corresponding to a prepayment fund, where the card return request indicates an identifier of a prepayment card to be returned and card return information.

Step S1602: determining a target prepayment card corresponding to the identifier of the prepayment card and a smart contract sub-wallet corresponding to the target prepayment card according to the card return request; where a second digital currency corresponding to the target prepayment card is stored in the smart contract sub-wallet, and the smart contract sub-wallet is set in the merchant operating agency and is bound to a prepayment card smart contract.

Step S1603: sending the card return information to the prepayment card smart contract for verification, and after determining that the verification passes by the prepayment card smart contract, generating an eleventh digital currency according to the card return information and the second digital currency, and storing the eleventh digital currency in a first digital currency wallet of a user.

In the embodiments of the present disclosure, the user may negotiate with the merchant and the merchant may initiate the card return request, or the user may initiate the card return request via the user end. After receiving the card return request, the merchant operating agency may verify card return information according to the prepayment card smart contract deployed in the merchant operating agency. In one embodiment of the present disclosure, the card return information indicates a card return reason, and the prepayment card smart contract verifies whether the card return reason indicated by the card return request is consistent with a card return reason indicated by the prepayment card smart contract. For example, the prepayment card smart contract is written in such that the card can be returned only if the card return reason is that the prepayment card has expired or the merchant has stopped providing services. Then, after receiving the card return request, the prepayment card smart contract in the merchant operating agency may verify whether the card return reason indicated by the card return request meets the card return reason in the smart contract.

If the card return reason indicated by the card return request is inconsistent with the card return reason indicated by the prepayment card smart contract, the merchant operating agency may directly reject the card return request, or return prompt information about the inconsistency to the initiator (the user end or the merchant end) of the card return request. If the initiator of the card return request supplements a content newly negotiated by the user and the merchant, the card return request may be processed according to the content newly negotiated. For example, when the merchant stops providing services corresponding to the target prepayment card due to a merchant's own reason, the merchant may negotiate with the user to compensate the user with an additional amount of money or other preferential services. At this time, the card return information carried in the card return request may include this newly negotiated compensation, resulting in the card return information carried in the card return request not matching the card return information indicated by the smart contract. At this time, the user or the merchant may supplement a new agreement to allow the merchant operating agency to continue to process the card return request.

In one implementation of the present disclosure, in a case where the card return reason is a user reason, a specific implementation of step S1603 may include: generating card return application information according to the card return request, and sending the card return application information to a user end, where the card return application information indicates a card return check time limit; and determining that check feedback information of the card return application information sent by the user end is received within the card return check time limit, where the check feedback information indicates that the card return request is agreed, and generating the eleventh digital currency according to the card return information indicated by the smart contract and the second digital currency.

In this implementation, if the card return reason is a personal reason of the user, the merchant operating agency may send the generated card return application information to the user end, so that the user end sends the check feedback information within the card return check time limit, to determine that the user agrees to the card return request. After determining that the user agrees to the card return request, the merchant operating agency generates the eleventh digital currency to be returned to the first digital currency wallet of the user, according to the second digital currency and the card return information indicated by the prepayment card smart contract.

In another embodiment of the present disclosure, in a case where the card return reason is a merchant reason, a specific implementation of step S1603 may include: generating card return application information according to the card return request, and sending the card return application information to a merchant end corresponding to a target merchant, where the card return application information indicates a card return check time limit; determining that check feedback information of the card return application information sent by the merchant end is received within the card return check time limit, where the check feedback information indicates that the card return request is agreed, and generating the eleventh digital currency according to the card return information indicated by the smart contract and the second digital currency.

In this implementation, if the card return reason is due to the merchant, the merchant operating agency may send the generated card return application information to the merchant end, so that the merchant end sends the check feedback information within the card return check time limit, to determine that the merchant agrees to the card return request. After determining that the merchant agrees to the card return request, the merchant operating agency generates the eleventh digital currency to be returned to the first digital currency wallet of the user, according to the second digital currency and the card return information indicated by the prepayment card smart contract. Here, if the user chooses the merchant reason to return the card, the merchant needs to check. If the merchant does not check within a certain period of time (the card return check time limit), it may be directly returned back to the first digital currency wallet of the user.

Herein, the first digital currency wallet may also be determined according to the prepayment card smart contract. For example, a real-name digital currency wallet of the user may be written into the prepayment card smart contract, and it is agreed to be returned to this digital currency wallet when the card is returned. Then, when the card is returned, the first digital currency wallet may be directly determined according to the prepayment card smart contract. In addition, the second digital currency may also be determined according to a user wallet determination instruction. For example, when the user initiates the card return request via the user end, and the account of the user end is bound to multiple available digital currency wallets, the user may select one from the multiple available digital currency wallets as the first digital currency wallet for the card return, and the user end may generate the user wallet determination instruction according to the selection, and send the user wallet determination instruction to the merchant operating agency via the user end back platform, so that the merchant operating agency determines the first digital currency wallet according to the user wallet determination instruction. In addition, if it is found that the originally determined first digital currency wallet is unavailable when returning the card, the merchant operating agency may prompt the user to modify the first digital currency wallet via the merchant end and/or the user end. When the user modifies the first digital currency wallet, a user wallet determination instruction may be generated accordingly, to re-determine the first digital currency wallet.

In one embodiment of the present disclosure, a specific implementation of generating the eleventh digital currency may include: calculating a card return amount according to card return configuration information and the second digital currency; and generating the eleventh digital currency corresponding to the card return amount. Herein, the card return configuration information is pre-configured in the smart contract; and/or, the card return request carries the card return configuration information. The card return configuration information includes a card return ratio or a card return amount.

When storing the second digital currency in the smart contract sub-wallet, it is an amount of the second digital currency that is determined according to the deposit configuration information. The deposit configuration information may include a deposit ratio or a deposit amount, which may be pre-configured in the prepayment card smart contract according to relevant laws and regulations, or an agreement between the merchant, the merchant operating agency and the user, or may be carried when initiating the generation request for the prepayment card. It could be understood that the carried deposit ratio or deposit amount may also be agreed in advance by three parties: the merchant, the merchant operating agency and the user. For example, in a case where the deposit ratio is 80%, if the total amount corresponding to the target prepayment card is 100, then the amount of the second digital currency stored in the smart contract sub-wallet is 80, in order to avoid the merchant's misappropriation in advance. In addition, a digital currency with an amount of 20 is in the available state and may be directly stored into a recipient wallet of the merchant. For another example, when the deposit amount is 70, the total amount corresponding to the target prepayment card is still 100, then the amount of the second digital currency stored in the smart contract sub-wallet is 70, and additionally, the digital currency with an amount of 30 is stored in the merchant digital currency wallet.

Accordingly, when returning the card, the card return amount is calculated according to the card return configuration information and the second digital currency, and the eleventh digital currency corresponding to the card return amount is generated. For example, the card return ratio included in the card return configuration information is 80%, and when the amount of the second digital currency is 40, the card return amount may be calculated to be 50, then the eleventh digital currency with an amount of 50 is generated.

In one implementation of the present disclosure, the card return configuration information and the deposit configuration information may not correspond with each other, for example, the card return configuration information is agreed upon by the merchant, the merchant operating agency and the user additionally, to clarify the ratio or the amount allocation between the user and the merchant in the process of the card return. For example, the card return ratio included in the card return configuration information is 60%, and when the amount of the second digital currency is 40, the card return amount may be calculated to be 24, then the eleventh digital currency with an amount of 24 is generated. In addition, a difference between the second digital currency and the eleventh digital currency may be stored in the merchant digital currency wallet corresponding to the target merchant, that is, the difference between the second digital currency and the eleventh digital currency may belong to the merchant.

In one embodiment of the present disclosure, the card return configuration information and a corresponding card return amount calculation formula of the card return configuration information may be pre-written into the prepayment card smart contract. After receiving the card return request, the card return amount may be verified according to the prepayment card smart contract. Specifically, the card return information sent by the merchant or the user may also carry the card return amount. Then, when verifying, the prepayment card smart contract may also verify whether the card return amount indicated by the card return information is consistent with the card return amount calculated according to the card return configuration information, that is, verify whether the card return amount requested by the merchant or the user is consistent with the card return amount calculated according to the card return configuration information. The card return configuration information may be pre-configured in the prepayment card smart contract. If the card return amount indicated by the card return information is consistent with the card return amount calculated according to the card return configuration information, it is determined that the verification passes, and then the eleventh digital currency may be generated according to the card return amount.

It could be understood that before receiving the card return request, the merchant operating agency may generate the target prepayment card and store the second digital currency according to a generation request for the prepayment card. In one embodiment of the present disclosure, the generation process of the first target prepayment card may be shown in FIG. 4 as step S401 to step S406.

In the above embodiment, the target prepayment card is generated according to the digital currency in the second digital currency wallet, that is, a source of the digital currency for generating the target prepayment card and a card return object correspond to the same user. When returning the card, the generated eleventh digital currency may also be returned to the first digital currency wallet of the same user.

In addition, as shown in FIG. 12 and FIG. 15, after the target prepayment card is generated, the first user (gifter) who owns the first target prepayment card may gift the target prepayment card to the second user (giftee). The gifted target prepayment card is bound to the user information of the giftee, that is, the gifted target prepayment card corresponds to the digital currency wallet of the giftee, and the eleventh digital currency is stored in the first digital currency wallet of the giftee when returning the card. In this case, the target prepayment card is generated according to the digital currency in the second digital currency wallet of the gifter, and the first digital currency wallet and the second digital currency wallet correspond to different users. In the process of the card return, the generated eleventh digital currency is returned to the first digital currency wallet of the giftee.

In one embodiment of the present disclosure, in order to increase the merchant's income, before receiving the card return request for the prepayment card, the merchant operating agency may, according to the prepayment card smart contract, transfer the second digital currency in the smart contract sub-wallet to the financial management account; when generating the eleventh digital currency, the merchant operating agency may transfer the digital currency corresponding to the card return amount from the financial management account to the smart contract sub-wallet; and then generate the eleventh digital currency according to the digital currency in the smart contract sub-wallet.

Herein, the financial management account may be set in the merchant operating agency. If the financial management account is within the merchant operating agency, the merchant operating agency may directly transfer the second digital currency to the financial management account according to the smart contract. If the financial management account is an account on another financial management platform, the merchant operating agency may transfer the digital currency in the smart contract sub-wallet to a financial management platform corresponding to the financial management account, and transfer the digital currency from the financial management platform to the financial management account.

When the user purchases the prepayment card, the merchant operating agency should sign a tripartite agreement with the user and the merchant, to agree on that the fund corresponding to the prepayment card shall be given to the merchant operating agency for the deposit, and agree on rights and responsibilities of each party in the processes of triggering the generation, usage and card return, etc., of the prepayment card according to the smart contract; and further to agree on that the digital currency in the smart contract sub-wallet is available for the financial management within a limited scope, and agree on an owner of financial management income and losses, for example, that the financial management income belongs to the merchant and the losses are borne by the merchant. Therefore, after storing the digital currency in the smart contract sub-wallet, the digital currency in the smart contract sub-wallet may be transferred to the financial management account, which is conducive to increasing the income of the escrowed fund and thus protecting the merchant's rights and interests.

In another embodiment of the present disclosure, after the prepayment card is generated, the prepayment card identifier of the target prepayment card and any one or more of the following may also be stored accordingly: a usage record, a recharge record, a commodity return record and a card return record of the target prepayment card; and the prepayment card identifier and record information are sent to the user end back platform, so that the user end back platform pushes the record information to the user end corresponding to target user information according to a binding relationship between the target prepayment card and the target user information.

After the user purchases the target prepayment card successfully, the merchant operating agency may store information such as the usage record, the recharge record, the commodity return record and/or the card return record correspondingly according to the prepayment card identifier of the prepayment card. When the user purchases the prepayment card, the user needs to provide identity information such as the mobile phone number. After the user purchases the prepayment card successfully, the merchant operating agency may bind the user communication identifier (such as the mobile phone number, etc.) to the target prepayment card, and send the binding result to the user end back platform. For example, the merchant operating agency may generate index information corresponding to the target prepayment card, as a binding result. The index information may include: a payment wallet corresponding to the target prepayment card, a real-name wallet associated with the user, the prepayment card type, the user communication identifier, a merchant prepayment fund type (a unique number assigned by the merchant operating agency for the prepayment card issued by the merchant), the prepayment card identifier of the target prepayment card, a merchant identifier, a card purchase amount, an identifier of the merchant operating agency, a prepayment card state (being in gift, waiting to be collected, having been gifted, etc.), a generation time of the target prepayment card, and a validity period of the target prepayment card. If the prepayment card of the user is gifted by other people or is used to be gifted to other people, the index result may further include a field indicating whether the card is gifted, which is used as a prompt to indicate whether the card is gifted, and additionally, may include fields of a gifter's sub-wallet ID, a gifter's mobile phone number, and a gifted time, etc., so as to display the target prepayment card's information about the gift. Herein, the user communication identifier may be the mobile phone number of the user to whom the prepayment card belongs, and the mobile phone number is used for identity binding to the prepayment card. The prepayment card identifier refers to a unique number assigned by the merchant operating agency to the prepayment card issued by the merchant, which is unique within the merchant operating agency. In addition, the index result may further include a card number of a merchant prepayment card, which refers to a card number of a prepayment card assigned by the merchant to the target prepayment card. The user end back platform may associate the prepayment card type according to the prepayment card identifier. The identifier of the merchant operating agency is a unique number assigned by the merchant operating agency to the merchant and is unique within the merchant operating agency. The identifier of the merchant operating agency may be an operating agency code. The generation time of the target prepayment card may be determined according to a time when the payment time is successful, which is used for sorting multiple prepayment cards' display.

A management module at the user end back platform end may manage the index information. Specifically, the management module of the user end back platform may preassociate a prepayment fund payment wallet with an account of the user end. When the user purchases the prepayment card on his or her own, the management module may perform association according to a wallet ID of the payment wallet; when the user receives the gift, the anonymous prepayment card and the real-name prepayment card may be associated by using the mobile phone number.

According to the above embodiments, after the target prepayment card is generated, the target prepayment card may be bound to the user communication identifier (such as the mobile phone number) by the merchant operating agency and/or the user end back platform. Herein, the user end corresponding to the user end back platform may be in the form of an APP (Application) or applet, and the merchant end may also be in the form of an APP or applet. If the binding is performed directly by the merchant operating agency, the merchant operating agency may send the binding result to the user end back platform, so that the user end back platform may bind the target prepayment card to registered target user information according to the binding result. Therefore, later in a life cycle of the target prepayment card, the user end back platform may push the usage record, the recharge record, the commodity return record, and/or the card return record of the prepayment card, etc., to the user end corresponding to the target user information, according to the binding relationship.

In another embodiment of the present disclosure, the card return request is a cancellation request initiated according to a validity period of the target prepayment card and/or a merchant state. Specifically, when the validity period of the target prepayment card ends or the merchant is unable to continue to provide services due to closure/bankruptcy/running away, etc., the user or the merchant may initiate the cancellation request for the prepayment card. For example, the anonymous prepayment card is set with a validity period, and before the validity period ends, by the prepayment card smart contract, a cancellation notification may be initiated to the merchant or user, so that the merchant or the user initiates the card return request according to the cancellation notification. Before the prepayment card expires, the merchant may contact the user in advance to inform the user of its cancellation arrangement. In addition, before selling the target prepayment card, the merchant operating agency may investigate the merchant and agree with the merchant on conditions under which services cannot be provided, for example, conditions that a store of the merchant has been withdrawn, a service cannot be provided for a period of time (such as within three months), etc. When the merchant operating agency determines, according to an on-site inspection or user feedback, that the merchant is indeed unable to provide services, or receives proof of the merchant's bankruptcy, the merchant operating agency may actively initiate the cancellation request.

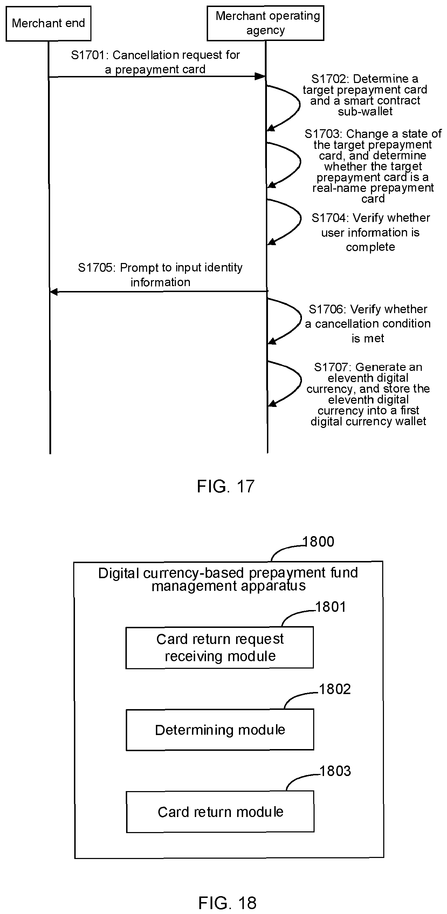

During the cancellation process of the target prepayment card, the prepayment card smart contract may verify whether the cancellation condition is met (such as whether the validity period has expired or the merchant can no longer provide services), the state of the first digital currency wallet (whether the first digital currency wallet can receive payments normally, etc.) and/or whether the user's information is complete, etc., to ensure the smooth execution of the cancellation process. Taking an example in which the merchant is unable to continue to provide services, the cancellation process may include the following steps as shown in FIG. 17.

Step S1701: the merchant sends a cancellation request for the prepayment card to the prepayment fund management apparatus (the merchant operating agency) via the merchant end.

Herein, the cancellation request indicates a prepayment card identifier of the prepayment card to be canceled and cancellation information.

Step S1702: the merchant operating agency determines a target prepayment card corresponding to the prepayment card identifier and a smart contract sub-wallet corresponding to the target prepayment card according to the cancellation request.

Step S1703: the merchant operating agency changes the state of the target prepayment card to being canceled, and determines whether the target prepayment card is a real-name prepayment card. If the target prepayment card is the real-name prepayment card, step S1704 is executed; otherwise, step S1706 is executed.

Step S1704: whether the user information is complete, is verified by the prepayment card smart contract. If so, step S1705 is executed; otherwise, step S1706 is executed.

Step S1705: the user is prompted to input identity information and save the identity information.

Step S1706: whether the cancellation condition is met, is verified by the prepayment card smart contract. If so, step S1707 is executed, otherwise, the current process is terminated.

For example, a cancellation amount, a cancellation reason, etc., may be verified, to verify whether the cancellation condition is met.

Step S1707: an eleventh digital currency is generated according to the card return information and the second digital currency, the eleventh digital currency is stored in a first digital currency wallet of the user, and the state of the target prepayment card is changed to having been canceled.

It can be seen from the digital currency-based prepayment fund management method according to the embodiments of the present disclosure that, the prepayment card smart contract is signed in advance by the merchant operating agency and the target merchant, and the smart contract sub-wallet corresponding to the target prepayment card is set in the merchant operating agency, and the second digital currency corresponding to the target prepayment card is stored in the smart contract sub-wallet. The second digital currency stored in the smart contract sub-wallet does not belong to the target merchant, so the target merchant cannot misappropriate the second digital currency in advance. When the user requires to return the card, or the prepayment card requires to be canceled due to expiry of the prepayment card or a business failure of the merchant, etc., the user or the merchant may initiate a card return request, and an eleventh digital currency corresponding to the card return amount may be generated according to the second digital currency, and then the eleventh digital currency may be stored in the first digital currency wallet of the user, to return the unused digital currency in the target prepayment card to the user, thereby improving the transaction security of the prepayment card, which is conducive to protecting **the user**'s rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet to the financial management account via the same operating agency, which is conducive to improving the merchant's rights and interests.

FIG. 18 is a schematic diagram of main modules of a digital currency-based prepayment fund management apparatus according to the embodiments of the present disclosure. As shown in FIG. 18, the digital currency-based prepayment fund management apparatus 1800 according to the embodiments of the present disclosure may be applied to a merchant operating agency, and include: a card return request receiving module 1801, a determining module 1802 and a card return module 1803; where
the card return request receiving module 1801 is configured to receive a card return request for a prepayment card corresponding to a prepayment fund, where the card return request indicates an identifier of a prepayment card to be returned and card return information;
the determining module 1802 is configured to determine a target prepayment card corresponding to the identifier of the prepayment card and a smart contract sub-wallet corresponding to the target prepayment card according to the card return request; where a second digital currency corresponding to the target prepayment card is stored in the smart contract sub-wallet, and the smart contract sub-wallet is set in the merchant operating agency and is bound to a prepayment card smart contract; and
the card return module 1803 is configured to send the card return information to the prepayment card smart contract for verification, and after determining that the verification passes by the prepayment card smart contract, generate an eleventh digital currency according to the card return information and the second digital currency, and store the eleventh digital currency in a first digital currency wallet of a user.

In one embodiment of the present disclosure, the card return module 1803 is configured to calculate a card return amount according to card return configuration information and the second digital currency; and generate the eleventh digital currency corresponding to the card return amount.

In one embodiment of the present disclosure, the card return configuration information is pre-configured in the prepayment card smart contract; and/or the card return request carries the card return configuration information. The card return configuration information includes a card return ratio or a card return amount.

In one embodiment of the present disclosure, the card return information indicates card return amount; the card return module 1803 is configured to calculate card return amount according to the card return configuration information pre-configured in the prepayment card smart contract; and verify whether the card return amount indicated by the card return information is consistent with the card return amount calculated by the card return configuration information.

In one embodiment of the present disclosure, the card return information indicates a card return reason, and the card return module 1803 is configured to verify whether the card return reason indicated by the card return request is consistent with a card return reason indicated by the prepayment card smart contract.

In one embodiment of the present disclosure, in a case where the card return reason is a user reason, the card return module 1803 is configured to generate card return application information according to the card return request, and send the card return application information to a user end, where the card return application information indicates a card return check time limit; determine that check feedback information of the card return application information sent by the user end is received within the card return check time limit, where the check feedback information indicates that the card return request is agreed, and generate the eleventh digital currency according to the card return information indicated by the prepayment card smart contract and the second digital currency.

In one embodiment of the present disclosure, in a case where the card return reason is a merchant reason, the card return module 1803 is configured to generate card return application information according to the card return request, and send the card return application information to a merchant end corresponding to a target merchant, where the card return application information indicates a card return check time limit; determine that check feedback information of the card return application information sent by the merchant end is received within the card return check time limit, where the check feedback information indicates that the card return request is agreed, and generate the eleventh digital currency according to the card return information indicated by the smart contract and the second digital currency.

In one embodiment of the present disclosure, the card return module 1803 is further configured to receive a user wallet determination instruction, and determine the first digital currency wallet according to the user wallet determination instruction; determine the first digital currency wallet by the prepayment card smart contract.

In one embodiment of the present disclosure, the target prepayment card is generated according to the digital currency in the second digital currency wallet, and the first digital currency wallet and the second digital currency wallet correspond to different users.

In one embodiment of the present disclosure, the target prepayment card is generated according to the digital currency in the first digital currency wallet.

In one embodiment of the present disclosure, the management apparatus further includes: a processing module; where the processing module is configured to correspondingly store a prepayment card identifier of the target prepayment card and any one or more of the following: a usage record, a recharge record, a commodity return record and a card return record of the target prepayment card; and send the prepayment card identifier and record information to the user end back platform, so that the user end back platform pushes the record information to the user end corresponding to target user information according to a binding relationship between the target prepayment card and the target user information.

In one embodiment of the present disclosure, a difference between the second digital currency and the eleventh digital currency is stored in a merchant digital currency wallet corresponding to a target merchant.

In one embodiment of the present disclosure, the processing module is further configured to before receiving the card return request for the prepayment card, transfer the second digital currency in the smart contract sub-wallet to a financial management account according to the prepayment card smart contract; the card return module 1803 is configured to transfer a digital currency corresponding to the card return amount from the financial management account to the smart contract sub-wallet; and generate the eleventh digital currency according to the digital currency in the smart contract sub-wallet.

In one embodiment of the present disclosure, the card return request is a cancellation request initiated according to a validity period of the target prepayment card and/or a merchant state.

In one embodiment of the present disclosure, the card return module 1803 is configured to verify whether a cancellation condition is met, a state of the first digital currency wallet and/or whether the user's information is complete.

It can be seen from the digital currency-based prepayment fund management apparatus according to the embodiments of the present disclosure that, the prepayment card smart contract is signed in advance by the merchant operating agency and the target merchant, and the smart contract sub-wallet corresponding to the target prepayment card is set in the merchant operating agency, and the second digital currency corresponding to the target prepayment card is stored in the smart contract sub-wallet. The second digital currency stored in the smart contract sub-wallet does not belong to the target merchant, so the target merchant cannot misappropriate the second digital currency in advance. When the user requires to return the card, or the prepayment card requires to be canceled due to expiry of the prepayment card or a business failure of the merchant, etc., the user or the merchant may initiate a card return request, and an eleventh digital currency corresponding to the card return amount may be generated according to the second digital currency, and then the eleventh digital currency may be stored in the first digital currency wallet of the user, to return the unused digital currency in the target prepayment card to the user, thereby improving the transaction security of the prepayment card, which is conducive to protecting the user's rights and interests.

In addition, the smart contract sub-wallet is set in the merchant operating agency, so that the merchant may communicate directly with its corresponding operating agency, which is convenient for deploying the prepayment card smart contract, and is also convenient for storing the second digital currency in the smart contract sub-wallet to the financial management account via the same operating agency, which is conducive to improving the merchant's rights and interests.

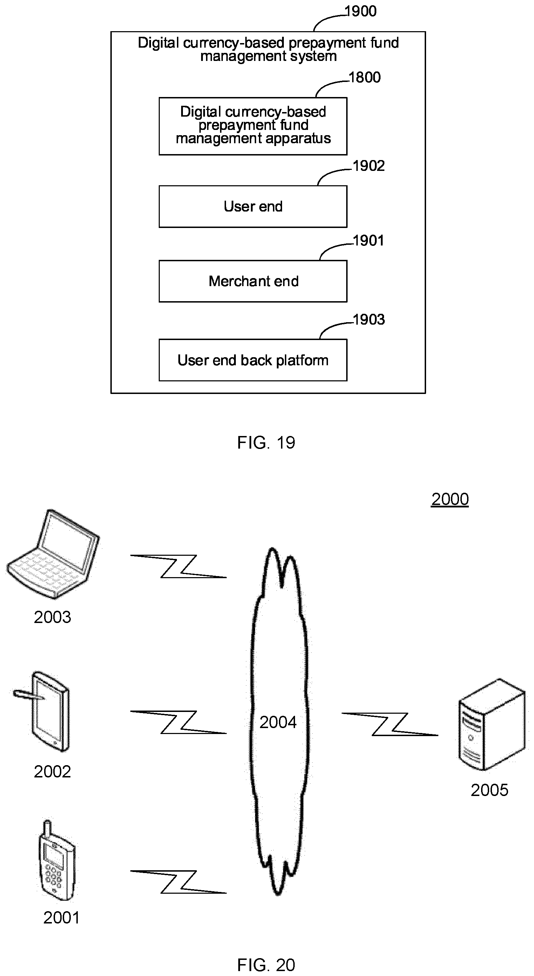

FIG. 19 is a schematic diagram of main modules of a digital currency-based prepayment fund management system according to the embodiments of the present disclosure. As shown in FIG. 19, the digital currency-based prepayment fund management system 1900 in the embodiments of the present disclosure may include: the digital currency-based prepayment fund management apparatus 1800 provided in any one of the above embodiments and a merchant end 1901; where
the merchant terminal 1901 is configured to send a card return request to the management apparatus according to a generated prepayment card corresponding to a prepayment fund, and the card return request indicates an identifier of the prepayment card to be returned and card return information.

In one embodiment of the present disclosure, continuing to refer to FIG. 19, the system may further include: a user end 1902 and a user end back platform 1903; where
the user end 1902 is configured to send the card return request to the user end back platform according to the generated prepayment card, where the card return request indicates the identifier of the prepayment card to be returned and the card return information;
the user end back platform 1903 is configured to send the card return request to the management apparatus.

In one embodiment of the present disclosure, the management apparatus 1800 is configured to correspondingly store the identifier of the prepayment card and any one or more of: a usage record, a recharge record, a commodity return record and a card return record of the target prepayment card; and send the identifier of the prepayment card and record information to the user end back platform 1903.

The user end back platform 1903 is configured to push the record information to the user end corresponding to target user information according to a binding relationship between the target prepayment card and the target user information.

FIG. 20 shows an exemplary system architecture 2000 that can apply a digital currency-based prepayment fund management method or a digital currency-based prepayment fund management system in the embodiments of the present disclosure.

As shown in FIG. 20, the system architecture 2000 may include a terminal device 2001, a terminal device 2002, a terminal device 2003, a network 2004 and a server 2005. The network 2004 is used as a medium to provide a communication link between the terminal devices 2001, 2002, 2003 and the server 2005. The network 2004 may include various connection types, such as a wired communication link, or a wireless communication link, or a fiber optic cable, or the like.

The user may use the terminal devices 2001, 2002, 2003 to interact with the server 2005 via the network 2004, to receive or send messages, etc. Various communication client applications, such as a shopping application, a web browser application, a search application, an instant messaging tool, an email client, a social platform software, etc., may be installed on the terminal devices 2001, 2002, and 2003.

The terminal devices 2001, 2002, and 2003 may be various electronic devices having a displaying screen and supporting web browsing, which include, but are not limited to, a smart phone, a tablet computer, a laptop portable computer, a desktop computer, or the like.

The server 2005 may be a server that provides various services, such as a background management server that provides support for the payment request initiated by the user using the terminal devices 2001, 2002, and 2003. The background management server may analyze and process data such as the received payment request, and feed back a payment result to the terminal device.

It should be understood that the number of the terminal devices, the network and the server in FIG. 20 are merely illustrative. Depending on the implementation requirements, there may be any number of terminal devices, networks, and servers.

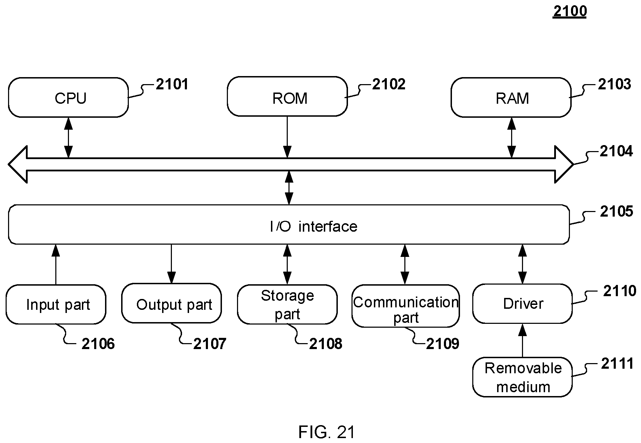

Referring to FIG. 21 as follows, FIG. 21 shows a structural schematic diagram of a computer system 2100 of a terminal device applicable for implementing the embodiments of the present disclosure. The terminal device shown in FIG. 21 is merely an example and shall not impose any limitation on the functions and the usage scope of the embodiments of the present disclosure.

As shown in FIG. 21, the computer system 2100 includes a central processing unit (CPU) 2101, which may perform various appropriate actions and processes according to a program stored in a read-only memory (ROM) 2102 or a program loaded from a storage part 2108 into a random access memory (RAM) 2103. The RAM has also stored thereon various programs and data required for operations of the system 2100. The CPU 2101, the ROM 2102, and the RAM 2103 are connected to each other via a bus 2104. An input/output (I/O) interface 2105 is also connected to the bus 2104.

The following components are connected to the I/O interface 2105: an input part 2106 including a keyboard, a mouse, etc.; an output part 2107 including such as a cathode ray tube (CRT), a liquid crystal display (LCD), etc., and a speaker, etc.; a storage part 2108 including a hard disk, etc.; and a communication part 2109 including a network interface card such as an LAN (local area network) card, a modem, etc. The communication part 2109 performs the communication process via a network such as the Internet. A driver 2110 may also be connected to the I/O interface 2105 as needed. A removable medium 2111, such as a magnetic disk, an optical disk, a magneto-optical disk, a semiconductor memory, etc., is installed on the driver 2110 as needed, so that a computer program read from the removable medium 2111 may be installed into the storage part 2108 as needed.

Particularly, according to the embodiments disclosed in the present disclosure, the processes described with reference to the flowcharts above may be implemented as a computer software program. For example, the embodiments disclosed in the present application include a computer program product, which includes a computer program carried on a computer-readable medium, and the computer program includes program codes for performing methods shown in the flowcharts. In such embodiment, the computer program may be downloaded and installed from the network via the communication part 2109, and/or installed from the removable medium 2111. When the computer program is executed by the central processing unit (CPU) 2101, the above-described functions defined in the system of the present disclosure are performed.

It should be noted that the computer-readable medium shown in the present disclosure may be a computer-readable signal medium or a computer-readable storage medium or any combination of the above-mentioned two. The computer-readable storage medium may be, for example, but not limited to: a system, apparatus, or device of electricity, magnetism, light, electromagnetism, infrared ray, or semi-conductor, or any combination thereof. Specific examples of the computer-readable storage medium may include, but be not limited to: an electrical connector with one or more conductive lines, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device or any suitable combination thereof. In the present disclosure, the computer-readable storage medium may be any tangible medium containing or storing a program that may be used by an instruction-executing system, apparatus, or device, or used in combination with the instruction-executing system, apparatus, or device. In the present disclosure, the computer-readable signal medium may include a data signal propagated in a baseband or as a part of a carrier wave, where the data signal carries a computer-readable program code. The data signal propagated in such manner may be in many forms, including, but not limited to: an electromagnetic signal, an optical signal, or any suitable combination thereof. The computer-readable signal medium may also be any computer-readable medium other than the computer-readable storage medium, the computer-readable medium may send, propagate, or transmit a program that is used by an instruction-executing system, apparatus, or device, or used in combination with the instruction-executing system, apparatus, or device. A program code contained in the computer-readable medium may be transmitted by using any suitable medium, including, but not limited to: wireless, electric wire, optical cable, radio frequency (RF) or the like, or any suitable combination thereof.

The flowcharts and block diagrams in the drawings illustrate the architectures, functions, and operations that could be implemented by the system, the method, and the computer program product in various embodiments of the present disclosure. In this regard, each block in the flowcharts or block diagrams may represent one module, program segment, or part of a code, and the above-mentioned module, program segment, or part of the code contains one or more executable instructions for implementing specified logic functions. It also should be noted that, in some alternative implementations, the functions marked in the blocks may also occur in an order different from the order marked in the drawings. For example, two blocks shown in succession may actually be executed in parallel substantially, and they may sometimes be executed in the reverse order, which depends on the involved functions. It also should be noted that, each block in the block diagrams and/or flowcharts and the combination of the blocks in the block diagrams and/or flowcharts may be implemented by a dedicated hardware-based system that performs specified functions or operations, or may be implemented by a combination of dedicated hardware and computer instructions.

The involved modules described in the embodiments of the present disclosure may be implemented by software or by hardware. The described modules may also be set in a processor, for example, may be described as that: a processor includes a generation request receiving module, a prepayment card generating module and a digital currency storing module. Herein, names of these modules do not, in some cases, constitute a limitation on the modules themselves. For example, the prepayment card generating **module may also be described as a "module for generating a target** prepayment card".

As another aspect, the present disclosure further provides a computer-readable medium, which may be included in the device described in the above embodiments; or may exist independently without being assembled into the device. The computer-readable medium carries one or more programs. The one or more programs, when executed by the one device, cause the device to: receive a generation request for a prepayment card corresponding to a prepayment fund, the generation request indicating the target merchant corresponding to the prepayment card to be generated, user information of the prepayment card, a prepayment amount, and a prepayment card type; generate a payment order according to the prepayment amount and receive a first digital currency for prepayment; generate a target prepayment card and a smart contract sub-wallet according to the target merchant, the user information of the prepayment card and the first digital currency, where the smart contract sub-wallet is set in the merchant operating agency and is bound to a prepayment card smart contract according to the prepayment card type; and store a second digital currency corresponding to the target prepayment card in the smart contract sub-wallet.

According to the technical solutions of the embodiments of the present disclosure, through a prepayment fund service agreement between a merchant operating agency and a target merchant, and deploying a prepayment card smart contract in the merchant operating agency, after the merchant operating agency receives a generation request for a prepayment card, a payment order may be generated according to a prepayment amount to enable a user to pay, thus to receive a first digital currency used for prepayment. Then, a target prepayment card and a smart contract sub-wallet are generated according to the target merchant, user information of the prepayment card and the first digital currency. The smart contract sub-wallet is opened in the merchant operating agency, but belongs to the user, and is bound to the target prepayment card of the user correspondingly, the prepayment card smart contract is bound to the smart contract sub-wallet for execution. Therefore, a second digital currency corresponding to the target prepayment card is stored in the smart contract sub-wallet, and the second digital currency in the wallet does not belong to the target merchant as well, so that the target merchant cannot misappropriate the second digital currency in advance, thereby improving the transaction security of the prepayment card, which is beneficial to protecting rights and interests of the user.

In addition, the second digital currency stored in the smart contract sub-wallet does not belong to the target merchant, so the target merchant cannot misappropriate the second digital currency in advance. After the usage request for the prepayment card is received, the fifth digital currency corresponding to the first transaction amount is generated according to the second digital currency, and the fifth digital currency is stored in the merchant digital currency wallet corresponding to the target merchant. It is the fifth digital currency stored in the merchant digital currency wallet that belongs to the merchant, thereby improving the transaction security of the prepayment card, which is conducive to **protecting the user**'s rights and interests.

In addition, after receiving a gift request for the prepayment card corresponding to the prepayment fund, the identifier of the first prepayment card and the user information of the giftee is verified by the gift smart contract, and after the verification passes, the second target prepayment card and the second smart contract sub-wallet are generated, which both belong to the giftee, and the second digital currency is stored in the second smart contract sub-wallet, thereby implementing the gifting of the first target prepayment card. The second target prepayment card generated after the gifting is bound to the user information of the giftee, and the giftee may enjoy the same rights and interests as the gifter, thereby improving the transaction security of the prepayment card and improving the user experience.

Furthermore, the second digital currency stored in the smart contract sub-wallet does not belong to the target merchant, so that the target merchant cannot misappropriate the second digital currency in advance. When the user requires to return the card, or the prepayment card requires to be canceled due to expiry of the prepayment card or a business failure of the merchant, etc., the user or the merchant may initiate a card return request, and an eleventh digital currency corresponding to the card return amount may be generated according to the second digital currency, and then the eleventh digital currency may be stored in the first digital currency wallet of the user, to return the unused digital currency in the target prepayment card to the user, thereby improving the transaction security of the prepayment card, which is conducive to protecting the user's rights and interests.

In addition, the smart contract sub-wallet is set in the merchant operating agency, so that the merchant may communicate directly with its corresponding operating agency, which is convenient for storing the second digital currency in the smart contract sub-wallet to the financial management account via the same operating agency, which is conducive to improving the merchant's rights and interests.

The specific implementations mentioned above do not constitute a limitation on the scope of protection of the present disclosure. Those skilled in the art should understand that various modifications, combinations, sub-combinations, and substitutions may be made depending on design requirements and other factors. Any modifications, equivalent substitutions, and improvements, etc., made within the spirit and principles of the present disclosure shall be included within the scope of protection of the present disclosure.

## Claims

1. A digital currency-based prepayment fund management method, applied to a merchant operating agency, wherein the merchant operating agency signs a prepayment fund service agreement with a target merchant and deploys one or more prepayment card smart contracts, and the method comprises:
receiving a generation request for a prepayment card corresponding to a prepayment fund, the generation request indicating the target merchant corresponding to the prepayment card to be generated, user information of the prepayment card, a prepayment amount, and a prepayment card type;
generating a payment order according to the prepayment amount and receiving a first digital currency for prepayment;
generating a target prepayment card and a smart contract sub-wallet according to the target merchant, the user information of the prepayment card and the first digital currency, wherein the smart contract sub-wallet is set in the merchant operating agency and is bound to a prepayment card smart contract according to the prepayment card type; and
storing a second digital currency corresponding to the target prepayment card in the smart contract sub-wallet.

2. The method according to claim 1, wherein storing the second digital currency corresponding to the target prepayment card in the smart contract sub-wallet, comprises:
calculating a deposit amount to be stored in the smart contract sub-wallet according to deposit configuration information and the prepayment amount;
generating the second digital currency corresponding to the deposit amount, and storing the second digital currency in the smart contract sub-wallet; wherein
the deposit configuration information comprises: a deposit ratio or a deposit amount;
the deposit configuration information is pre-configured in the prepayment card smart contract; and/or
the generation request carries the deposit configuration information.

3. The method according to claim 2, further comprising:
generating a third digital currency according to a difference between the prepayment amount and the second digital currency, and storing the third digital currency in a merchant digital currency wallet of the target merchant.

4. The method according to claim 1, wherein
a prepayment card type and a prepayment card quota are determined according to the user information of the prepayment card indicated by the generation request for the prepayment card, wherein the user information of the prepayment card comprises a user communication identifier corresponding to the prepayment card to be generated.

5. The method according to claim 4, wherein
the user information of the prepayment card further comprises user real-name information, and the user real-name information is obtained according to a real-name wallet corresponding to the user communication identifier.

6. The method according to claim 1, further comprising: associating an identifier of the smart contract sub-wallet with a prepayment card identifier of the target prepayment card; and
storing a usage record, a recharge record, a commodity return record and/or a card return record of the target prepayment card correspondingly according to the prepayment card identifier.

7. The method according to claim 6, wherein after generating the target prepayment card, the method further comprises:
binding a user communication identifier to the prepayment card identifier, and sending a binding result to a user end back platform, so that the user end back platform establishes a binding relationship between the target prepayment card and target user information according to the user communication identifier and pre-stored user information.

8. The method according to claim 7, wherein after storing any one of the usage record, the recharge record, the commodity return record, and/or the card return record, the method further comprises:
sending the prepayment card identifier and record information to the user end back platform, so that the user end back platform pushes the record information to a user end corresponding to the target user information according to the binding relationship.

9. The method according to claim 7, wherein
the binding result comprises: the user communication identifier, the prepayment card identifier, a merchant identifier, an identifier of the merchant operating agency, and a generation time of the target prepayment card.

10. The method according to claim 1, wherein in a case where an amount of the first digital currency is greater than the prepayment amount, the method further comprises:
generating a fourth digital currency according to a difference between the first digital currency and the prepayment amount, and storing the fourth digital currency in a user digital currency wallet.

11. The method according to claim 6, wherein after generating the target prepayment card, the method further comprises:
sending the prepayment card identifier and a generation result to a merchant end, and sending a configuration prompt of the target prepayment card to the merchant end; and
receiving management information sent by the merchant end according to the configuration prompt, and the managing the target prepayment card according to the management information.

12. The method according to claim 11, wherein
the management information indicates any one or more of: a payment password of the target prepayment card, a setting end of the payment password, a management end of the target prepayment card, a responsible end of an invalid transaction corresponding to the target prepayment card and usage credential information of the target prepayment card; wherein the usage credential information comprises: an item of rights and interests, a usage method of rights and interests and/or a remaining amount of rights and interests.

13. The method according to claim 1, further comprising:
transferring the second digital currency in the smart contract sub-wallet to a financial management account according to the prepayment card smart contract, and determining an owner of a financial management amount obtained from the financial management account according to a financial management income end indicated by the prepayment card smart contract.

14. A digital currency-based prepayment fund management apparatus, applied to a merchant operating agency, wherein the merchant operating agency signs a prepayment fund service agreement with a target merchant and deploys one or more prepayment card smart contracts, and the apparatus comprises:
a generation request receiving module, configured to receive a generation request for a prepayment card corresponding to a prepayment fund, the generation request indicating the target merchant corresponding to the prepayment card to be generated, user information of the prepayment card, a prepayment amount, and a prepayment card type;
an order generating module, configured to generate a payment order according to the prepayment amount and receive a first digital currency for prepayment;
a prepayment card generating module, configured to generate a target prepayment card and a smart contract sub-wallet according to the target merchant, the user information of the prepayment card and the first digital currency, wherein the smart contract sub-wallet is set in the merchant operating agency and is bound to a prepayment card smart contract according to the prepayment card type; and
a digital currency storing module, configured to store a second digital currency corresponding to the target prepayment card in the smart contract sub-wallet.

15. A digital currency-based prepayment fund management system, comprising the management apparatus according to claim 14 and a merchant end; wherein the merchant end comprises a merchant digital currency wallet;
the merchant end is configured to send a generation request for a prepayment card to the management apparatus according to a trigger of a user, and the generation request indicates the target merchant corresponding to the prepayment card to be generated, user information of the prepayment card, a prepayment amount, and a prepayment card type; and
the management apparatus is configured to generate a payment order according to the prepayment amount and receive a first digital currency for prepayment; generate a target prepayment card and a smart contract sub-wallet according to the target merchant, the user information of the prepayment card and the first digital currency, wherein the smart contract sub-wallet is set in the merchant operating agency and is bound to a prepayment card smart contract according to the prepayment card type; and store a second digital currency corresponding to the target prepayment card in the smart contract sub-wallet.

16. The system according to claim 15, further comprising: a user end back platform; wherein
the management apparatus is further configured to bind a user communication identifier to a prepayment card identifier of the target prepayment card, and send a binding result to the user end back platform; send the prepayment card identifier and record information to the user end back platform after storing any one of a usage record, a recharge record, a commodity return record, and/or a card return record corresponding to the target prepayment card; and
the user end back platform is configured to bind the target prepayment card to target user information according to the user communication identifier and pre-stored user information; push the record information to a user end corresponding to the target user information, according to a binding relationship.

17. A digital currency-based prepayment fund management method, applied to a merchant operating agency, and comprising:
receiving a usage request for a prepayment card corresponding to a prepayment fund, the usage request indicating an identifier of the prepayment card to be used, a transaction identifier, a first transaction amount, and first transaction rights and interests;
determining a target prepayment card corresponding to the identifier of the prepayment card and a smart contract sub-wallet corresponding to the target prepayment card according to the usage request; wherein a second digital currency corresponding to the target prepayment card is stored in the smart contract sub-wallet, and the smart contract sub-wallet is set in the merchant operating agency, and is bound to a prepayment card smart contract; and
sending the first transaction amount and the first transaction rights and interests to the prepayment card smart contract for verification, generating a fifth digital currency corresponding to the first transaction amount according to the second digital currency, after determining that the verification passes by the prepayment card smart contract, and storing the fifth digital currency in a merchant digital currency wallet corresponding to a target merchant.

18. The method according to claim 17, further comprising:
generating a new second digital currency according to a difference between the second digital currency and the fifth digital currency, and storing the new second digital currency in the smart contract sub-wallet.

19. The method according to claim 17, wherein sending the first transaction amount and the first transaction rights and interests to the prepayment card smart contract for the verification, comprises:
performing the verification on the first transaction amount and the first transaction rights and interests according to an amount calculation parameter and deposit configuration information corresponding to the target prepayment card, wherein the deposit configuration information and the amount calculation parameter are pre-configured in the prepayment card smart contract.

20. The method according to claim 17 or 18, wherein the second digital currency is stored in the smart contract sub-wallet, and the method further comprises: storing the second digital currency in a financial management account via the smart contract sub-wallet, and determining an owner of a financial management amount obtained from the financial management account according to a financial management income end indicated by the prepayment card smart contract;
before generating the fifth digital currency corresponding to the first transaction amount according to the second digital currency, the method further comprises:
transferring a digital currency corresponding to the first transaction amount from the financial management account to the smart contract sub-wallet; and
generating the fifth digital currency according to the digital currency in the smart contract sub-wallet.

21. The method according to claim 17, wherein after generating the fifth digital currency corresponding to the first transaction amount, the method further comprises:
correspondingly storing the prepayment card identifier and any one or more record information of: a usage record, a recharge record, a commodity return record or a card return record;
sending the prepayment card identifier and the record information to a user end back platform, so that the user end back platform pushes the record information to a user end corresponding to target user information according to a binding relationship between the target prepayment card and the target user information.

22. The method according to claim 17, further comprising:
receiving a commodity return request, the commodity return request indicating an identifier of a prepayment card to be refunded, an original transaction identifier, a commodity return amount, and commodity return rights and interests;
determining a target prepayment card to be refunded and a usage record of the target prepayment card according to the identifier of the prepayment card;
in a case where the prepayment card smart contract determines that a commodity return condition is met, generating a sixth digital currency corresponding to the commodity return amount according to a digital currency balance in the merchant digital currency wallet and the commodity return amount, and storing the sixth digital currency in the smart contract sub-wallet; or
in a case where the prepayment card smart contract determines that a commodity return condition is met, generating a sixth digital currency according to a digital currency balance in the merchant digital currency wallet, the second digital currency corresponding to the target prepayment card and the commodity return amount, and storing the sixth digital currency in the smart contract sub-wallet, wherein an amount of the sixth digital currency is a sum of the second digital currency and the commodity return amount.

23. The method according to claim 22, wherein after storing the sixth digital currency in the smart contract sub-wallet, the method further comprises:
sending usage credential information of the target prepayment card to a merchant end; wherein the usage credential information comprises the commodity return amount and the commodity return rights and interests.

24. The method according to claim 22, wherein in a case where the digital currency balance in the merchant digital currency wallet is less than the commodity return amount, the method further comprises:
generating a sixth digital currency according to the digital currency balance in the merchant digital currency wallet, and updating the commodity return amount according to a difference between the commodity return amount and the sixth digital currency.

25. The method according to claim 24, wherein after updating the commodity return amount according to the difference between the commodity return amount and the sixth digital currency, the method further comprises:
when a usage request for a prepayment card is received again, and in a case where a second transaction amount indicated by the usage request is greater than updated commodity return amount, generating a seventh digital currency corresponding to a difference between the second transaction amount and the updated commodity return amount, and storing the seventh digital currency in the merchant digital currency wallet corresponding to the target merchant; and
in a case where the second transaction amount is not greater than the updated commodity return amount, updating the commodity return amount again according to the difference between the updated commodity return amount and the second transaction amount.

26. The method according to claim 17, further comprising:
receiving a recharge request for the prepayment card corresponding to the prepayment fund, the recharge request indicating an identifier of the prepayment card to be recharged, a recharge amount, and recharge rights and interests;
determining a target prepayment card corresponding to the identifier of the prepayment card and a smart contract sub-wallet corresponding to the target prepayment card according to the recharge request;
sending the recharge amount and the recharge rights and interests to the prepayment card smart contract for verification, and after determining that the verification passes, generating a payment order according to the recharge amount and receiving an eighth digital currency for recharge;
storing the eighth digital currency in the smart contract sub-wallet; or
generating a new second digital currency according to the eighth digital currency and the second digital currency, and storing the new second digital currency in the smart contract sub-wallet.

27. The method according to claim 26, wherein after generating the payment order according to the recharge amount, the method further comprises:
changing a prepayment card type according to the recharge amount and the recharge rights and interests, and re-binding a prepayment card smart contract according to the prepayment card type.

28. A digital currency-based prepayment fund management apparatus, applied to a merchant operating agency, and comprising:
a request receiving module, configured to receive a usage request for a prepayment card corresponding to a prepayment fund, the usage request indicating an identifier of the prepayment card to be used, a transaction identifier, a first transaction amount, and first transaction rights and interests;
a first prepayment card determinating module, configured to determine a target prepayment card corresponding to the identifier of the prepayment card and a smart contract sub-wallet corresponding to the target prepayment card according to the usage request; wherein a second digital currency corresponding to the target prepayment card is stored in the smart contract sub-wallet, and the smart contract sub-wallet is set in the merchant operating agency, and is bound to a prepayment card smart contract; and
a digital currency processing module, configured to send the first transaction amount and the first transaction rights and interests to the prepayment card smart contract for verification, generating a fifth digital currency corresponding to the first transaction amount according to the second digital currency, after determining that the verification passes by the prepayment card smart contract, and storing the fifth digital currency in a merchant digital currency wallet corresponding to a target merchant.

29. A digital currency-based prepayment fund management system, comprising: the digital currency-based prepayment fund management apparatus according to claim 28 and a merchant end; wherein
the merchant end is configured to send a usage request to the management apparatus, wherein the usage request indicates an identifier of a prepayment card to be used, a transaction identifier, a first transaction amount, and first transaction rights and interests; and
the management apparatus is configured to generate a fifth digital currency corresponding to the first transaction amount, and store the fifth digital currency in a merchant digital currency wallet corresponding to the target merchant.

30. The system according to claim 29, further comprising: a user end back platform; wherein
the management apparatus is configured to correspondingly store the identifier of the prepayment card and any one or more of: a usage record, a recharge record, a commodity return record, or a card return record, and send the identifier of the prepayment card and record information to the user end back platform;
the user end back platform is configured to push the record information to a user end corresponding to target user information according to a binding relationship between a target prepayment card and the target user information.

31. A digital currency-based prepayment fund management method, applied to a merchant operating agency, and comprising:
receiving a gift request for a prepayment card corresponding to a prepayment fund, the gift request indicating an identifier of a first prepayment card to be gifted and user information of a giftee;
determining a first target prepayment card corresponding to the identifier of the first prepayment card to be gifted and a first smart contract sub-wallet corresponding to the first target prepayment card according to the gift request, wherein a second digital currency corresponding to the first target prepayment card is stored in the first smart contract sub-wallet, and the first smart contract sub-wallet is set in the merchant operating agency and is bound to a first prepayment card smart contract;
sending the identifier of the first prepayment card and the user information of the giftee to a gift smart contract pre-loaded according to the gift request to perform verification, and after determining that the verification passes, generating a second target prepayment card and a second smart contract sub-wallet according to the first target prepayment card, the second digital currency and the user information of the giftee, wherein the second smart contract sub-wallet is set in the merchant operating agency and is bound to a second prepayment card smart contract;
storing the second digital currency in the second smart contract sub-wallet; and
canceling the first target prepayment card and the first smart contract sub-wallet.

32. The method according to claim 31, wherein
sending a gift prompt to the giftee, and receiving feedback information input by the giftee according to the gift prompt;
the gift smart contract pre-loaded according to the gift request to perform the verification, comprises:
verifying a current state of the first target prepayment card and/or whether the user information of the giftee is complete; or
confirming a reception of a prepayment agreement signed by the giftee; or
verifying a gift time validity of the first target prepayment card, whether a gift cancellation indication of the first target prepayment card is received before the feedback information, and whether the feedback information comprises a gift reception indication, according to the feedback information.

33. The method according to claim 31, wherein
the user information of the giftee comprises a user communication identifier corresponding to the second target prepayment card, the user communication identifier is bound to a prepayment card identifier of the second target prepayment card, and a binding result is sent to a user end back platform, so that the user end back platform establishes a binding relationship between the second target prepayment card and the user information of the giftee according to the user communication identifier and pre-stored user information.

34. The method according to claim 31, further comprising:
receiving a card return request for the prepayment card corresponding to the prepayment fund, wherein the card return request indicates an identifier of the second target prepayment card to be returned;
determining the second target prepayment card, a balance in the second target prepayment card, and the user information of the giftee bound to the second target prepayment card according to the identifier of the second target prepayment card, wherein the user information indicates a digital currency wallet of the giftee;
generating a tenth digital currency according to the balance in the second target prepayment card, and storing the tenth digital currency in the digital currency wallet of the giftee.

35. The method according to claim 34, wherein generating the tenth digital currency according to the balance in the second target prepayment card, comprises:
transferring a digital currency corresponding to the balance in the second target prepayment card from a financial management account to the second smart contract sub-wallet, and generating the tenth digital currency according to the digital currency in the second smart contract sub-wallet.

36. A digital currency-based prepayment fund management apparatus, applied to a merchant operating agency, and comprising:
a gift request receiving module, configured to receive a gift request for a prepayment card corresponding to a prepayment fund, the gift request indicating an identifier of a first prepayment card to be gifted and user information of a giftee;
a second prepayment card determining module, configured to determine a first target prepayment card corresponding to the identifier of the first prepayment card to be gifted and a first smart contract sub-wallet corresponding to the first target prepayment card according to the gift request, wherein a second digital currency corresponding to the first target prepayment card is stored in the first smart contract sub-wallet, and the first smart contract sub-wallet is set in the merchant operating agency and is bound to a first prepayment card smart contract;
a gifting module, configured to send the identifier of the first prepayment card and the user information of the giftee to a gift smart contract pre-loaded according to the gift request to perform verification, and after determining that the verification passes, generate a second target prepayment card and a second smart contract sub-wallet according to the first target prepayment card, the second digital currency and the user information of the giftee, wherein the second smart contract sub-wallet is set in the merchant operating agency and is bound to second prepayment card smart contract; and store the second digital currency in the second smart contract sub-wallet; and
a canceling module, configured to cancel the first target prepayment card and the first smart contract sub-wallet.

37. A digital currency-based prepayment fund management system, comprising: the digital currency-based prepayment fund management apparatus according to claim 36, a merchant end and a user end back platform; wherein
the merchant end or the user end back platform is configured to send a gift request for a prepayment card corresponding to a prepayment fund to the management apparatus, wherein the gift request indicates an identifier of a first prepayment card to be gifted and user information of a giftee.

38. The system according to claim 37, wherein
the merchant end and/or the user end back platform is further configured to generate a gift passphrase and send the gift passphrase to a gifter; and when receiving the gift passphrase input by the giftee, activate the second target prepayment card according to the gift passphrase.

39. A digital currency-based prepayment fund management method, applied to a merchant operating agency, and comprising:
receiving a card return request for a prepayment card corresponding to a prepayment fund, wherein the card return request indicates an identifier of a prepayment card to be returned and card return information;
determining a target prepayment card corresponding to the identifier of the prepayment card and a smart contract sub-wallet corresponding to the target prepayment card according to the card return request; wherein a second digital currency corresponding to the target prepayment card is stored in the smart contract sub-wallet, and the smart contract sub-wallet is set in the merchant operating agency and is bound to a prepayment card smart contract; and
sending the card return information to the prepayment card smart contract for verification, and after determining that the verification passes by the prepayment card smart contract, generating an eleventh digital currency according to the card return information and the second digital currency, and storing the eleventh digital currency in a first digital currency wallet of a user.

40. The method according to claim 39, wherein
calculating a card return amount according to card return configuration information and the second digital currency; and generating the eleventh digital currency corresponding to the card return amount.

41. The method according to claim 40, wherein the card return configuration information comprises: a card return ratio or a card return amount;
the card return configuration information is pre-configured in the prepayment card smart contract; and/or
the card return request carries the card return configuration information.

42. The method according to claim 40, wherein the card return information indicates card return amount; and sending the card return information to the prepayment card smart contract for the verification, comprises:
calculating card return amount according to the card return configuration information pre-configured in the prepayment card smart contract; and
verifying whether the card return amount indicated by the card return information is consistent with the card return amount calculated by the card return configuration information.

43. The method according to claim 39, wherein the card return information indicates a card return reason, and sending the card return information to the prepayment card smart contract for the verification, comprises:
verifying whether the card return reason indicated by the card return request is consistent with a card return reason indicated by the prepayment card smart contract.

44. The method according to claim 43, wherein in a case where the card return reason is a user reason, generating the eleventh digital currency according to the card return information and the second digital currency, comprises:
generating card return application information according to the card return request, and sending the card return application information to a user end, wherein the card return application information indicates a card return check time limit;
determining that check feedback information of the card return application information sent by the user end is received within the card return check time limit, wherein the check feedback information indicates that the card return request is agreed, and generating the eleventh digital currency according to the card return information indicated by the prepayment card smart contract and the second digital currency; or
in a case where the card return reason is a merchant reason, generating the eleventh digital currency according to the card return information and the second digital currency, comprises:
generating card return application information according to the card return request, and sending the card return application information to a merchant end corresponding to a target merchant, wherein the card return application information indicates a card return check time limit;
determining that check feedback information of the card return application information sent by the merchant end is received within the card return check time limit, wherein the check feedback information indicates that the card return request is agreed, and generating the eleventh digital currency according to the card return information indicated by the smart contract and the second digital currency.

45. The method according to claim 39, wherein before storing the eleventh digital currency in the digital currency wallet of the user, the method further comprises: receiving a user wallet determination instruction, and determining the first digital currency wallet according to the user wallet determination instruction; and/or
determining the first digital currency wallet by the prepayment card smart contract.

46. The method according to claim 39, wherein a difference between the second digital currency and the eleventh digital currency is stored in a merchant digital currency wallet corresponding to a target merchant.

47. The method according to claim 40, wherein before receiving the card return request for the prepayment card, the second digital currency in the smart contract sub-wallet is transferred to a financial management account according to the prepayment card smart contract;
generating the eleventh digital currency corresponding to the card return amount, further comprises:
transferring a digital currency corresponding to the card return amount from the financial management account to the smart contract sub-wallet; and
generating the eleventh digital currency according to the digital currency in the smart contract sub-wallet.

48. The method according to claim 39, wherein the card return request is a cancellation request initiated according to a validity period of the target prepayment card and/or a merchant state.

49. A digital currency-based prepayment fund management apparatus, applied to a merchant operating agency, and comprising:
a card return request receiving module, configured to receive a card return request for a prepayment card corresponding to a prepayment fund, wherein the card return request indicates an identifier of a prepayment card to be returned and card return information;
a determining module, configured to determine a target prepayment card corresponding to the identifier of the prepayment card and a smart contract sub-wallet corresponding to the target prepayment card according to the card return request; wherein a second digital currency corresponding to the target prepayment card is stored in the smart contract sub-wallet, and the smart contract sub-wallet is set in the merchant operating agency and is bound to a prepayment card smart contract; and
a card return module, configured to send the card return information to the prepayment card smart contract for verification, and after determining that the verification passes by the prepayment card smart contract, generate an eleventh digital currency according to the card return information and the second digital currency, and store the eleventh digital currency in a first digital currency wallet of a user.

50. An electronic device for managing prepayment funds based on digital currencies, comprising:
one or more processors; and
a storage apparatus, configured to store one or more programs;
wherein the one or more programs, upon being executed by the one or more processors, cause the one or more processors to implement the method according to any one of claims 1 to 13, or 17 to 27, or 31 to 35, or 39 to 48.

51. A computer-readable medium having stored a computer program thereon, wherein the program, upon being executed by a processor, implements the method according to any one of claims 1 to 13, or 17 to 27, or 31 to 35, or 39 to 48.
